# NEW EUROPEAN PATENT SPECIFICATION

(11) **EP 4 153 919 B2**
(45) Date of publication and mention of the opposition decision: **30.09.2026**
(45) Mention of the grant of the patent: 14.02.2024
(21) Application number: 21720314.0
(22) Date of filing: 26.03.2021
(51) Int. Cl.: F24F 11/49, F24F 11/89, F24F 11/30

(54) **METHOD AND DEVICE FOR CONFIGURING A VENTILATION SYSTEM**
VERFAHREN UND VORRICHTUNG ZUM KONFIGURIEREN EINES BELÜFTUNGSSYSTEMS
PROCÉDÉ ET DISPOSITIF DE CONFIGURATION D'UN SYSTÈME DE VENTILATION

(30) Priority: 19.05.2020 BE 202005351
(43) Date of publication of application: 29.03.2023
(73) Proprietor: Renson NV, 8790 Waregem (BE)
(72) Inventor: VANDEKERCKHOVE, Steven Chris Emmanuel, 8500 Kortrijk (BE); MELANGE, Cedric Fernand, 8800 Roeselare (BE)
(74) Representative: Ipsilon Belgium
(86) International application number: PCT/IB2021/052518
(87) International publication number: WO 2021/234470

(56) References cited:
- WO-A1-2019/018622
- US-A1- 2011 112 875
- US-A1- 2017 003 046
- US-A1- 2017 167 746

## Description

### Technical Field

The present invention relates to the configuration of a ventilation system for ventilating one or more spaces in a building. More specifically, the present invention relates to a computer-implemented method for configuring a ventilation system in accordance with local requirements.

### State of the Art

There are various types of ventilation systems which make it possible to ventilate one or more spaces in a building. Thus, a distinction is made between ventilation systems with a natural supply and a mechanical discharge of air, also referred to as C systems in Belgium and the Netherlands, and ventilation systems with a mechanical supply and mechanical discharge of air, also referred to as D systems in Belgium and the Netherlands, and always combined with heat recovery in practice. These two systems may be designed as both centralized and decentralized systems, optionally demand-driven. The centralized embodiment comprises one ventilator which extracts the air from several rooms. The decentralized embodiment comprises several ventilators which each have a separate discharge duct and which are individually adjustable in order to regulate the extraction for each room individually. In a ventilation system with natural supply and mechanical discharge, air is discharged from the building actively, but the supply of air takes place passively. To this end, windows may for example be provided with air vents or tilt windows which are in communication with the open air. By means of air ducts and air vents, one or more ventilation motors extract air from spaces in the building which have to be ventilated, typically humid spaces, such as for example the kitchen, the bathroom and the toilet in a dwelling. In a ventilation system with mechanical supply and discharge and with heat/energy recovery, air is actively discharged to the outside and actively supplied from outside via one or more ventilators which are in communication with the spaces which have to be ventilated via supply and discharge ducts. Usually, these are High Efficiency (HR) ventilation systems in which a heat-recovery unit uses the heat from the discharged air to partly heat the air supplied from outside before this supplied air is distributed over the spaces to be ventilated.

In addition to one or more ventilation motors, a centralized or decentralized ventilation system therefore also comprises one or more supply lines and/or discharge lines typically including a valve and/or flow regulator for each supply line or discharge duct. The ventilation capacity, expressed in cubic meters per hour (m³/u), liters per second (I/s) or liters per hour (I/u), can then be regulated for each of the spaces to be ventilated by adjusting the motor speed, position of the valves and/or flow regulators.

The ventilation of buildings or spaces in buildings often has to satisfy standards and legislation which differ from country to country and vary significantly. Thus, the maximum capacity of air which is supplied to spaces to be ventilated and/or the maximum capacity of air which is discharged from spaces to be ventilated is defined in national standards. In Belgium, this is Belgian standard NBN D 50-001, for example, while in the Netherlands this is laid down in the Buildings decree. In France, the "Arrête du 24 mars 1982 relatif à l'aération des logements, version consolidée au 11 mai 2020" applies and, in addition thereto, the "Réglementation Thermique RT2012". Depending on the country, various different parameters have to be taken into account when configuring a ventilation system, such as, for example, in France the type of dwelling (apartment, terraced house, detached house, etc.), the number of floors of the dwelling, the number of rooms in the dwelling, the number of people present in the dwelling, the type of space or room (humid space vs. dry space, bedroom, bathroom, kitchen, etc.), the number of CO₂ particles measured in the air present, the atmospheric humidity, the air temperature, etc. In addition, the threshold values for the parameters differ from country to country. Thus, for example, in Belgium the ventilation flow should be increased from a threshold value of 900 ppm CO₂ particles, whereas the threshold values to increase the ventilation flow are different in other countries.

In paragraphs [0008] and [0009] of European patent EP2363656B1 in the name of Renson Ventilation NV, the problem of the country-specific standards with which manufacturers and installers of a ventilation system have to deal is mentioned, and paragraph [0010] says that there is no technology to accurately and automatically configure a ventilation system in such a way that it meets the requirements of the country in which the ventilation system is installed.

Usually, the motor speed, vents, valves and flow regulators are manually adjusted by an installer who has knowledge of the local standards in force. Configuring the ventilation system manually is laborious, time-consuming and prone to errors because the installer usually starts from theoretical settings which are prescribed for the ventilation system and which correspond to the maximum ventilation capacity which applies to spaces in dwellings in the country in question. These theoretical settings do not take the actual pressure losses in the system into account. Therefore, repeated measurements will be performed to ascertain how the actual ventilation capacity for a space deviates from the maximum ventilation capacity which should theoretically be achieved, and the valves will be adjusted in order to try to come closer to the maximum ventilation capacity. However, readjusting a valve in a supply or discharge duct for a space may have an effect on the ventilation flow in the supply or discharge ducts of other spaces, so that it may be necessary to readjust the settings of other valves.

In EP2363656B1, the accuracy with which a ventilation system is configured is increased by adjusting the flow-through opening of valves and/or flow regulators on the basis of measurements of the total supply or discharge flow of the actual ventilation system with its actual pressure losses, rather than on the basis of a theoretical characterization. Although this will make adjusting a ventilation system slightly easier, adjusting the ventilation system so that it conforms to the legislation (also referred to as configuring the ventilation system) remains a manual, iterative process which is laborious and time-consuming and is based on the knowledge the installer has of the local regulations which are in force. If the same ventilation system is fitted in another country, it will have to be configured by an installer who is familiar with the regulations which are in force there.

American patent application US2010/0170272A1 describes an air-conditioning system which automatically configures the on/off control settings of the device on the basis of the geographical location and/or climate zone. Although such a configuration of the on/off control settings of an apparatus is based on detecting the location, there is no guarantee that the apparatus will be configured in accordance with the local regulations which are in force. The motivation in US2010/0170272A1 for configuring the on/off control settings of the apparatus based on the location and/or climate zone is purely to be found in the optimization of the energy consumption of the air-conditioning system.

Also European patent application EP1865270A1, in paragraph [0004], refers to the country-specific requirements which a ventilation system has to meet, in particular with regard to the permitted fluctuations in ventilation flow as a result of changing pressure differences in the ducts of a self-regulating ventilation system. EP1865270A1 provides a mechanical solution, namely valve 3 which automatically deforms at a first deformation point 7 and second deformation point 8 on the basis of pressure differences and thus automatically regulates the ventilation flow. Although the solution solves the problem of flow control settings on the basis of pressure differences in the system, it is not a solution which allows a ventilation system to be configured automatically according to the standards in force in the country where the ventilation system is fitted.

United States Patent Application US 2017/0003046 A1 entitled "Climate Control System Including Indoor and Setpoint Temperature Difference and Exterior Temperature Based HVAC Mode Switching and Related Methods" describes a climate control system comprising a heating, ventilation and air conditioning (HVAC) system. The climate control system also comprises a temperature controller that obtains a setpoint temperature for the indoor area, determines a crossing of the external temperature of the setpoint temperature, and switches the operating mode for heating and cooling by the HVAC system based upon the crossing of the external temperature of the setpoint temperature and the indoor temperature moving beyond the setpoint temperature by a threshold temperature difference.

US2017/003046 discloses a set up wizard and configuration server where each device configuration may include at least one of a device address, a device location, and a device identifier such as an IP address of the device, the location of the device within a house, and channel location.

There are thus no technological solutions to automatically configure a ventilation system for a building which usually comprises a ventilation motor, supply and discharge lines, valves and/or vents and/or flow regulators, in such a way that the ventilation system ventilates the different spaces in the building in accordance with the technical standards and norms which are in force in the country where the ventilation system was installed.

It is therefore the object of the present invention to provide a technological solution which makes it possible for manufacturers, installers and/or users of a ventilation system to automatically configure that ventilation system in accordance with the regional standards which are in force in the country or region where the ventilation system was installed.

### Summary of the Invention

According to a first aspect, the invention relates to a computer-implemented method for configuring a ventilation system as defined in claim 1, the method comprising the following steps, carried out on an installer's device with data connectivity to said ventilation system:
- obtaining location data indicative of the location where said ventilation system is installed;
- obtaining a location-specific list of questions for said ventilation system using said location data;
- obtaining hardware configuration data for said ventilation system, wherein the hardware configuration data are acquired automatically by asking said ventilation system via a data connection between said installer's device and said ventilation system;
- mapping said hardware configuration data on questions from said location-specific list of questions to generate a first subset of answers to a first subset of questions from said location-specific list of questions;
- obtaining a second subset of answers to a second subset of questions from said location-specific list of questions via a user interface which remained unanswered after said mapping of said hardware configuration data on said location-specific list of questions;
- compiling a set of location-specific control settings comprising parameter values for configuring said ventilation system and said location data, on the basis of said first subset of answers and said second subset of answers to said location-specific list of questions; and
- configuring said ventilation system using the parameter values from said set of location-specific control settings.

According to the invention, an installer's device will thus configure the ventilation system completely automatically or semi-automatically using control settings which are location-specific and ensure that the ventilation system adheres to the local standards and norms which are in force. The installer's device may be a specially developed apparatus, but may, in variant embodiments, also be an intelligent portable apparatus such as a smartphone, a tablet computer, laptop computer, and the like on which a computer program or software application has been installed in order to carry out the steps of the method according to the present invention. The installer's device has data connectivity to the ventilation system, typically a bi-directional point-to-point connection via a wireless network, for example a WiFi, Zigbee or Bluetooth connection, or via a wired network, such as an Ethernet connection. The data connection may be a short-distance connection, for example via the home network of the dwelling where the ventilation system was fitted, or a long-distance connection, for example via the internet. In a variant embodiment, the installer's device may also comprise a configuration application which was installed in the ventilation system and to which an external apparatus connects, for example a smartphone on which an installer's application is installed. Such a configuration application may comprise, for example, a web interface or command line interface.

In a first step, the installer's device will thus collect coordinates or, more generally, location data which indicate where the ventilation system is located. These location data contain at least an indication of the country or the region where the ventilation system is situated. The installer's device can obtain such location data in various ways. If the installer's device is equipped with location-determining technology, for example satellite-based location-determining technology,, such as a GPS receiver, and if the installer's device is close to the ventilation system to be configured, then the location of the installer's device as determined by the inherent location-determining unit may be used. Alternatively, it is possible to make use of location-determining technology which is external to the installer's device, or information may be collected which contains an indirect indication of the location of the ventilation system, such as for example an Internet Protocol address (IP address) which is used by the ventilation system or peripheral equipment thereof. It is also possible for the installer's device to obtain the location of the ventilation system by asking the installer. The installer may, for example, be asked to enter the country in which the ventilation system is situated in a box, or may be offered a drop-down list of countries and/or regions from which the installer can select the country or the region of installation.

In a second step, the installer's device uses the obtained location data to acquire a location-specific list of questions for the ventilation system. The location-specific list of questions may be obtained from a central register in which lists of questions and control settings for the various countries and, if desired, for different types of ventilation systems are stored. The location-specific list of questions may also be selected from a set of location-specific list of questions which is available on the installer's device, for example in a cache memory in which these location-specific lists of questions have been stored beforehand. The location-specific list of questions is a technical list of questions with regard to the ventilation system and the building in which the ventilation system is installed and, for example, comprises questions such as: What type of dwelling is it? How many floors are there? How many rooms are there? How many supply lines are there? What is the number of valves? Which type of valve is used in each supply line? Is a valve fitted with a carbon monoxide sensor (CO sensor)? How many discharge lines are there?, etc. The technical list of questions depends on the ventilation system and is location-specific. In order to install the same type of ventilation system in different countries, a different technical list of questions will be obtained which at least contains those questions which have to be answered in order to be able to install the ventilation system according to the standards of the country in question. If the list of questions has to be retrieved from a central register in which lists of questions are stored for several types of ventilation systems, the installer's device will also have to identify the type of ventilation system beforehand, for example by requesting type information from the ventilation system or by asking the installer via a user interface. In an embodiment of the invention in which the installer's device comprises a configuration application which is incorporated in the ventilation system, the location-specific list of questions will be incorporated, for example, in a web interface, so that answers to the questions in the location-specific list of questions may also be received via the web interface of the configuration application.

In a third step, the installer's device will acquire hardware configuration data for the ventilation system which is to be configured. The hardware configuration data are acquired automatically by asking the ventilation system via the data connection between the installer's device and the ventilation system. The hardware configuration data comprise, for example: the type of motor, the number of motors, the number of supply lines, the number of discharge lines, type information for the valves in the respective lines, type information for flow regulators in the respective lines, type information for sensors which form part of the ventilation system, etc. In an embodiment of the invention in which the installer's device comprises a configuration application which is incorporated in the ventilation system, the configuration application may acquire the system-specific hardware configuration data via pre-programming or may acquire them automatically from another component in the ventilation system.

In a fourth step, the installer's device will map the acquired hardware configuration data on the questions from the location-specific list of questions. The installer's device will, for example, compare the name of a parameter which is requested in the location-specific list of questions with the names of parameters for which parameter values were received as part of the hardware configuration data. If there is a correspondence, the installer's device will automatically include the obtained parameter value as an answer to the respective question from the location-specific list of questions. In this way, a first subset of questions from the location-specific list of questions will be answered fully automatically by the installer's device and a first subset of answers will be produced. It is possible for this automatic mapping to be performed by a configuration application which forms part of the installer's device and is hosted by the ventilation system itself, and to comprise mapping that checks which questions from the location-specific list of questions have already been answered via pre-programming (the first subset) and which questions still have to be answered by asking the installer in situ (the second subset).

With regard to questions from the location-specific list of questions for which no answer was received by mapping the hardware configuration data, the installer's device will ask the installer via a user interface in a fifth step. A second subset of questions from the location-specific list of questions, more specifically the questions which could not be answered automatically by mapping the hardware configuration data, is presented to the installer who manually or semi-manually enters the answers by selecting an answer from a selection list of answers. In an embodiment of the invention in which the installer's device comprises a configuration application which is incorporated in the ventilation system, the second subset of questions may be asked via the interface of the configuration application to which the installer's application is connected.

Using the answers to the first subset and second subset of questions from the location-specific list of questions, the user device will then compile a set of location-specific control settings, specifically for the type of ventilation system and for the location where the ventilation system was installed. Compiling a set of control settings may comprise communicating the answers to the questions from the location-specific list of questions to a central register which selects a set of control settings on the basis of the answers and knowledge about the location of the ventilation system and sends them to the installer's device. In an alternative embodiment, various sets of control settings for the respective type of ventilation system have already been received by and/or stored in a cache memory of the installer's device and compiling a set of control settings consists of selecting one of the locally stored sets which corresponds to the answers to the questions from the location-specific list of questions. Compiling a set of control settings possibly also consists of duplicating certain subsets of control parameters. Thus, the installer's device will, on the basis of the answers to the location-specific list of questions, for example from a central register, receive the location-specific control settings for certain types of rooms, for example for a first subset of control settings for a kitchen, a second subset of control settings for a bedroom, a third subset of control settings for a bathroom. When the dwelling for which the ventilation system has to be configured comprises several bedrooms and several bathrooms, the installer's device will have to duplicate the control settings of the second subset and the third subset in order to compile a complete location-specific set of control settings for the ventilation system. Compiling a set of location-specific control settings may thus comprise replicating control settings for several rooms of the same type. When compiling a set of location-specific control settings, the fact that the same valve is used for several rooms may also be taken into account. If, for example, one valve is used to ventilate two toilets, the threshold value which is configured to increase the ventilation flow will be lower in certain countries than, for example, the threshold value which would be configured if each toilet had a separate valve for regulating ventilation. Furthermore, when compiling a set of location-specific control settings, the fact that the same type of valve may be used in different types of rooms can be taken into account, as a result of which the identification of the valves may differ, but the configuration is identical. Thus, for example, a bathroom valve may be situated in the discharge/supply line of a shower room, as a result of which, depending on the country, the control settings may be identical to or different from the control settings for the same valve which is installed in the discharge/supply line of a bathroom.

Finally, the compiled set of control settings will be used by the installer's device to configure the ventilation system using the parameter values from the set of control settings. The control settings comprise, for example, setting the flow rate for every room that has to be achieved, threshold values for sensor data, such as humidity, temperature, number of ppm, etc. in which case the valve position has to be changed or the flow rate has to be adjusted, a clock program (e.g. maximum flow rate between 6.00 a.m. and 8.00 a.m. in certain rooms), the reaction of the ventilation system in case smoke or fire is detected, the settings for frost protection, the valve position for a room, the motor speed of the ventilation motor, etc. Further parameters will be determined while adjusting the ventilation system, which is outside the scope of the present invention.

Due to the invention, during installation and starting up a ventilation system the relevant questions which allow the ventilation system to be configured according to the local standards and norms which are in force are answered. In this way, it is simpler for manufacturers, distributors and installers of ventilation systems to use the same ventilation system in several countries. Due to the invention, an installer with his installer's device can configure a certain type of ventilation system in buildings in different countries, and each of these ventilation systems will automatically be configured according to the standards which are in force in the respective country, irrespective of the fact whether the installer knows the local standards which are in force. If the standards in a certain country change, then it is sufficient to provide a new location-specific list of questions and new sets of control settings for the various reply combinations to the questions for the new location-specific list of questions in the central register to ensure that new installations are configured automatically according to the new standards in force.

In an embodiment of the method to configure a ventilation system according to the present invention, defined in claim 2, said location data are obtained from a positioning unit inside said installer's device.

Such an embodiment has the advantage that the installer's device does not have to set up or have any additional communication with other devices in order to obtain location data for the ventilation system. The installer's device uses its inherent technology to obtain location data for the ventilation system. This inherent technology may be a fitted GPS receiver, another satellite receiver which uses, for example, the Galileo, GLONASS or Beidou satellite system for positioning, or an entirely different positioning technology, for example based on wireless beacons, such as GSM antennas or WiFi access points and triangulation. Obviously, this embodiment requires the installer's device to be in the vicinity of the ventilation system at the moment of configuration, so that the location of the installer's device is representative of the location of the ventilation system. Location data obtained automatically by means of the inherent technology may optionally additionally be checked by the installer. Thus, the installer's device may ask the installer to confirm the automatically obtained location data via a user interface before using these data in further steps of the configuration process.

In an alternative embodiment of the method for configuring a ventilation system according to the present invention, defined in claim 3, said location data are obtained from a positioning unit which is outside said installer's device.

It is thus also possible for the installer's device to acquire knowledge about the location of the ventilation system by obtaining data from another device to which it connects, such as a smartphone, tablet computer, laptop computer, etc., which is equipped with a positioning unit, such as a GPS receiver. Relying on positioning technology which is external to the installer's device is desirable, in particular in situations in which the installer performs the configuration at a distance and the installer's device itself is not present at the location where the ventilation system is installed.

In yet another embodiment of the method for configuring a ventilation system according to the present invention, defined in claim 4, said location data are obtained via said user interface.

If no positioning technology is present inside or outside the installer's device or in addition to location data obtained from such a positioning technology, the installer's device may thus be configured to request the location of the ventilation system from the installer via a user interface and/or to ask the installer to confirm the location of the ventilation system as estimated on the basis of data obtained by positioning technology. The installer may, for example, be asked to fill in the country of installation in an empty box in the user interface, or the installer may be offered a selection list of countries from which the country of installation has to be selected. This different way of obtaining location data for the ventilation system is based on manual input by an installer or technician, and is thus possible more susceptible to errors. The susceptibility to errors may be reduced by asking the installer for verification and confirmation.

In yet another embodiment of the method for configuring a ventilation system according to the present invention, defined in claim 5, said location data are obtained from said ventilation system or peripheral equipment of said ventilation system.

Specifically, as has already been mentioned above, it is possible for the installer's device to receive information about the location of the ventilation system by obtaining data from another device to which it connects. That other device may be the ventilation system itself or peripheral equipment of the ventilation system such as a WiFi access point to which the ventilation system connects. The IP address of such a device may suffice, for example, as an indication of the country or the location where the ventilation system is situated.

An advantageous embodiment of the method for configuring a ventilation system according to the invention, defined in claim 6, furthermore comprises the following steps before said obtaining of a location-specific list of questions:
- obtaining a version identification of the software installed on said ventilation system;
- verifying said version identification against the version identification of the most recent version of said software; and
- installing said most recent version of said software on said ventilation system if said version identification does not correspond to said version identification of said most recent version.

Specifically, before obtaining the location-specific list of questions, it is advisable to check if the ventilation system has the most recent version of the firmware. If that is not the case, it is advisable to download and install the most recent version of the firmware on the ventilation system before proceeding with the location-specific configuration.

An advantageous embodiment of the method for configuring a ventilation system according to the present invention, defined in claim 7, furthermore comprises:
- storing said location-specific set of control settings in connection with said ventilation system and said location data.

The location-specific set of control settings may be re-used in this way if the same type of ventilation system has to be configured which is installed in the same country or in a region where the same standards apply. The set of control settings may be stored locally in a cache memory on the installer's device, so that the installer can use them during a subsequent configuration of the same type of ventilation system, or the set of control settings may be stored in a centralized way in a register, so that other installers can also use these to configure the same type of ventilation system installed in the same country. Storing the set of control settings also makes it possible to always return to the last available configuration in case of a defect, repair, restart of the ventilation system.

An advantageous embodiment of the method for configuring a ventilation system according to the present invention, as defined in claim 8, furthermore comprises:
- reporting said configuration of said ventilation system to a user device.

After the configuration of the ventilation system has been finished, the installer's device can thus report this to a user device provided with a user application which may or may not be used to adjust settings of the ventilation system. The installer's device will preferably not communicate directly with the user device, but report the configuration to the user device via the central register which, for example, forms part of a cloud computer system. Not only may the installer's device report that the configuration has been performed, but it may in addition also communicate the location-specific set of control settings used to configure the ventilation system to the user device, again preferably via the central register. In a preferred embodiment, the user device provided with a user application will, for reasons of security, not be given the opportunity to configure or reconfigure the ventilation system. The latter is preferably reserved for the installer who uses the installer's device provided with the installer's application to this end.

In an embodiment of the method for configuring a ventilation system according to the present invention, defined in claim 9, said configuring of said ventilation system is performed using the parameter values from said location-specific set of control settings is performed via said user device.

In variant embodiments of the method for configuring a ventilation system according to the invention, the configuration step may proceed via a user device with data connectivity to the ventilation system. This makes it possible, for example, for an installer to remotely prepare the configuration using his installer's device, following which the location-specific set of control settings is sent to a user device of a user who is situated in the vicinity of the ventilation system, so that the location-specific set of control settings is configured on the ventilation system via a short-distance data connection. Such an off-site pre-configuration of a ventilation system offers advantages with regard to configuration efficiency if, for example, several identical or similar installations in the same street, quarter or region have to be configured.

In an embodiment of the method for configuring a ventilation system according to the present invention, defined in claim 10, updating the parameter values of said location-specific set of control settings on said ventilation system is performed via said user device or directly from a central register.

It is possible that the parameter values which were initially configured on the ventilation system have to be updated due to a defect, repair, power cut, restart of the ventilation system, etc., but also due to a modification of the standards or requirements in a specific land. Such an update may also be prepared on an installer's device, after which the ventilation system may be configured with the (new) location-specific set of control settings via a user device of a user who is situated in the vicinity of the ventilation system. The update of the configuration parameter values may also be prepared in the central register which, for example, forms part of a cloud computer system and may then be directly transferred from the cloud computer system to the ventilation system.

According to a second aspect, the invention relates to an installer's device with data connectivity to a ventilation system as defined in claim 11, adapted to configure said ventilation system, said installer's device comprising a processing unit and a memory with a computer program which is adapted to allow the installer's device to perform the following steps:
- obtaining location data indicative of the location where said ventilation system is installed;
- obtaining a location-specific list of questions for said ventilation system using said location data;
- obtaining hardware configuration data for said ventilation system, wherein the hardware configuration data are acquired automatically by asking said ventilation system via a data connection between said installer's device and said ventilation system;
- mapping said hardware configuration data to questions from said location-specific list of questions to generate a first subset of answers to a first subset of questions from said location-specific list of questions;
- obtaining, via a user interface, a second subset of answers to a second subset of questions from said location-specific list of questions which remained unanswered after said mapping of said hardware configuration data on said location-specific list of questions;
- compiling a set of location-specific control settings comprising parameter values for configuring said ventilation system and said location data, on the basis of said first subset of answers and said second subset of answers to said location-specific list of questions; and
- configuring said ventilation system using the parameter values from said set of location-specific control settings.

According to a third aspect, the invention relates to a computer program product as defined in claim 12, comprising computer-implementable instructions to perform the following steps if this program is executed on a computer:
- obtaining location data indicative of the location where a ventilation system is installed;
- obtaining a location-specific list of questions for said ventilation system using said location data;
- obtaining hardware configuration data for said ventilation system, wherein the hardware configuration data are acquired automatically by asking said ventilation system via a data connection between an installer's device and said ventilation system;
- mapping said hardware configuration data on questions from said location-specific list of questions to generate a first subset of answers to a first subset of questions from said location-specific list of questions;
- obtaining, via a user interface, a second subset of answers to a second subset of questions from said location-specific list of questions which remained unanswered after said mapping of said hardware configuration data on said location-specific list of questions;
- compiling a set of location-specific control settings comprising parameter values for configuring said ventilation system and said location data on the basis of said first subset of answers and said second subset of answers to said location-specific list of questions; and
- configuring said ventilation system using the parameter values from said set of location-specific control settings.

According to a fourth aspect, the invention relates to a computer-readable storage means as defined in claim 13, comprising the computer program product according to the present invention.

### Brief Description of the Figures

Fig. 1 illustrates a first embodiment of the method and the installer's device according to the present invention in which location data are obtained via a user interface of the installer's device;
Fig. 2 illustrates a second embodiment of the method and the installer's device according to the present invention in which location data are obtained via a location-determining unit inside the installer's device;
Fig. 3 illustrates a third embodiment of the method and the installer's device according to the present invention in which the software version is verified beforehand;
Fig. 4 illustrates a fourth embodiment of the method and the installer's device according to the present invention in which a cache memory is used;
Fig. 5 illustrates a fifth embodiment of the method and the installer's device according to the present invention in which the configuration is reported to a user device;
Fig. 6 illustrates a sixth embodiment of the method and the installer's device according to the present invention in which the software version is verified beforehand, the control settings are stored in a central register, and the configuration is reported to a user device;
Fig. 7 illustrates a seventh embodiment of the method and the installer's device according to the present invention in which the software version is verified beforehand, the control settings are stored in a central register, the configuration is reported to a user device, and the configuration is updated via the user device;
Fig. 8 illustrates an eighth embodiment of the method and the installer's device according to the present invention in which the installer's device also comprises a configuration application which is incorporated in the ventilation system;
Fig. 9 illustrates a ninth embodiment of the method and the installer's device according to the present invention in which the installer's device also comprises a configuration application which is incorporated in the ventilation system; and
Fig. 10 shows a computer system which is suitable to carry out one or more steps in embodiments of the method according to the present invention.

### Description of Embodiments

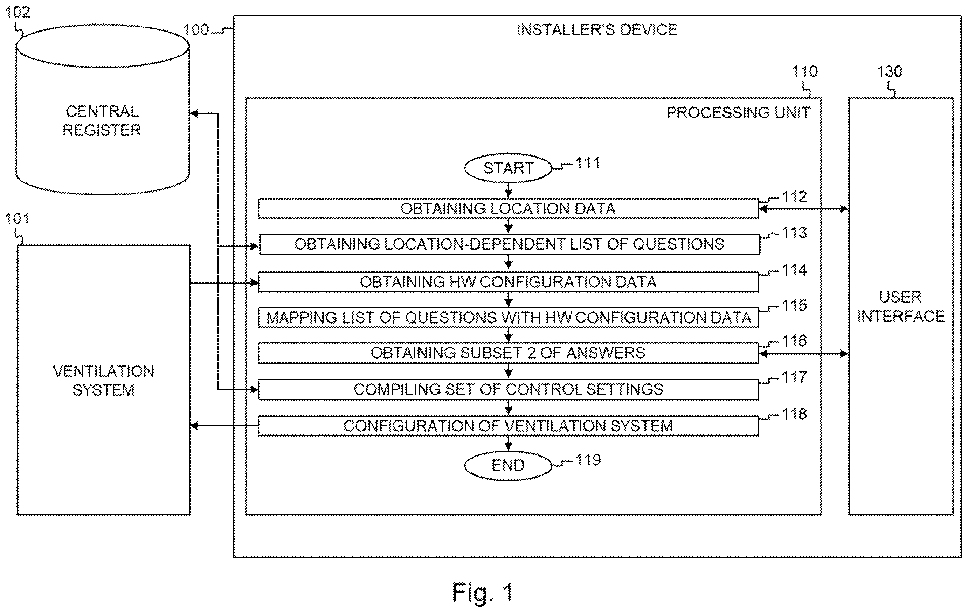

Fig. 1 illustrates a basic embodiment of the installer's device 100 and the method 111-119 for configuring a ventilation system 101 according to the invention. The installer's device 100 comprises a processing unit 110 and a user interface 130. By means of a computer program product, the processing unit 110 is configured in such a way that the steps 111-119 are carried out. In addition to the installer's device 100, Fig. 1 also shows the ventilation system 101 which is to be configured and a central register 102 which forms part of, for example, a cloud storage system and can be consulted by the installer's device 100 via the internet. After the configuration procedure is started in step 111, the processing unit 110 will collect location data in step 112 which are indicative of the location where the ventilation system 101 is situated. The term location is understood to mean the country or region in which certain standards or laws for ventilation systems are in force. The location data which are obtained in step 112 will thus at least have to contain an indication of such a country or region. In the embodiment illustrated in Fig. 1, the location data are obtained in step 112 by asking the user of the installer's device 100 for information, typically a technician or installer of the ventilation system 101 who was given the task to configure the ventilation system 101. The installer will be asked for information via the user interface 130 and input location data. This may be achieved, for example, by explicitly asking the installer in which country the ventilation system is installed or by offering the installer a selection list of possible countries or regions from which the installer choses one. Using the location data obtained in step 112, the processing unit 110 will retrieve a list of questions from the central register 102 in step 113. This list of questions is specific to the location where the ventilation system 101 is situated and contains the technical questions which have to be answered in order to be able to configure the ventilation system 101 in accordance with the standards which are in force at that location. If the computer program which configures the processing unit 110 can be used to configure different types of ventilation systems, the list of questions which is used in step 113 will not only be location-specific but also specific to the type of ventilation system to which ventilation system 101 belongs. It is possible for the processing unit 110 to then perform an intermediate step first in order to know the type of ventilation system, either from the ventilation system 101 itself or from the installer by asking him via the user interface 130. The obtained list of questions is, for example, a JSON document which contains at least the technical questions which have to be answered in order to be able to configure the ventilation system 101 in accordance with the standards which are in force at the location where the ventilation system 101 is situated. Preferably, these are questions for which there are only a limited number of possible choices as answers. In step 114, the processing unit 110 retrieves hardware configuration data from the ventilation system 101. The hardware configuration data which can be obtained automatically from the ventilation system 101 comprise, for example, the number of ventilators, the number of valves, the type of each valve, the number of flow regulators, the type of each flow regulator, etc. The hardware configuration data obtained automatically in step 114 are mapped by the processing unit 110 in step 115 on the questions from the location-specific list of questions. Mapping involves, for example, that the name of a hardware configuration parameter, e.g. "number of valves", is compared with the questions from the location-specific list of questions. If the name corresponds to a question, for example "What is the number of valves?", then the value for the hardware configuration parameter obtained in step 114 can be accepted as the answer to the corresponding question in step 115. The result of such a mapping in step 115 will be that a first subset of questions from the location-specific list of questions is answered automatically by the processing unit 110. In addition, a second subset of questions from the location-specific list of questions will remain unanswered. In step 116, the processing unit 110 will request the answers to this second subset of questions from the installer via the user interface 130. If, for example, in the respective country the type of dwelling determines the configuration of the ventilation system, subset 2 will contain the question "What is the type of dwelling?" and the installer will be asked to make a choice, for example, from a selection list comprising "apartment", "terraced house", "detached house ", "office", "industrial building" as possible answers. If, for example, in the respective country the number of floors determines the configuration of the ventilation system, subset 2 will contain the question "How many floors are there?" and the installer will be asked to make a choice, for example, from a selection list comprising "1", "2", "3", "more than 3" as possible answers. The installer will have to answer each of the questions from subset 2 in step 116. The answers to subset 1 which were obtained by mapping in step 115 and the answers to subset 2 which were obtained by asking the installer in step 116 allow the processing unit 110 to compile a set of control settings for the ventilation system 101 in step 117. Compiling the control settings means that the processing unit 110 will select the set of decision parameters for every type of valve, flow regulator or ventilator which forms part of the ventilation system 101 which corresponds to the answers to subset 1 and subset 2 of the location-specific list of questions. The set of decision parameters comprises, for example, a flow value for the valve and one or more threshold values at which the flow rate for the valve has to be increased or decreased. These threshold values may be determined, for example, by the sensors which are present in the ventilation system. Compiling the control settings furthermore means that the set of decision parameters for a certain type of valve, flow regulator or ventilator will be duplicated if several valves of the same type are present in the ventilation system 101, several flow regulators of the same type are present in the ventilation system 101, or several ventilators of the same type are present in the ventilation system 101. Compiling the control settings furthermore means that the set of decision parameters for a certain valve, flow regulator or ventilator can be modified if the valve, flow regulator or ventilator is used, for example, to ventilate several rooms. Finally, in step 117, the processing unit 110 obtains a set of control settings for configuring all valves, flow regulators and ventilators in the ventilation system 101, in which case the configuration is carried out in accordance with the standards which are in force at that location. The set of control settings is used in step 118 to configure the ventilation system 101 in an efficient way, following which the configuration process ends in step 119.

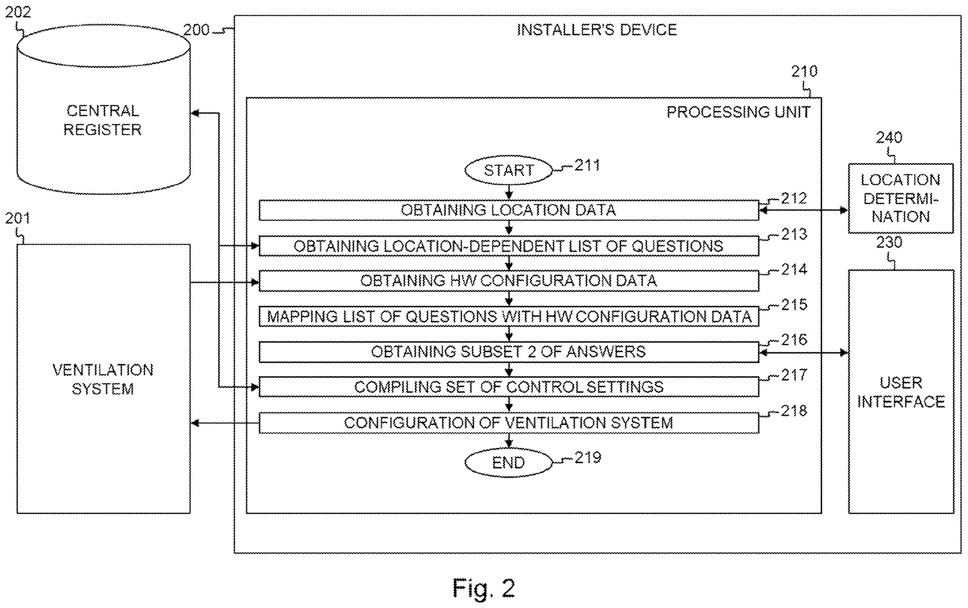

Fig. 2 illustrates a second embodiment of the installer's device 200 and the method 211-219 for configuring a ventilation system 201 according to the invention. The installer's device 200 comprises a processing unit 210 and a user interface 230. By means of a computer program product, the processing unit 210 is configured in such a way that the steps 211-219 are carried out. In addition to the installer's device 200, Fig. 2 also shows the ventilation system 201 which is to be configured and a central register 202 which forms part of, for example, a cloud storage system and can be consulted by the installer's device 200 via the internet. The steps 211-219 of this second embodiment correspond to the steps 111-119 of the first embodiment described above with reference to Fig. 1. However, this second embodiment differs from the first embodiment in the way in which the location data for the ventilation system 201 are obtained in step 212. Whereas the location data in the first embodiment were obtained by asking the installer for information via the user interface 130, the location data in the second embodiment are obtained from a location-determining unit 240 which forms part of the installer's device 200. The location-determining unit may be any suitable unit which makes data available which are indicative of the location of the installer's device 200, such as for example a GPS receiver which passes on GPS coordinates, a unit which determines a location on the basis of triangulation and signal strengths of WiFi access points, or even a unit which simply passes on the IP address of the installer's device 200, so that the location can be retrieved. For this second embodiment, it is assumed that the installer's device 200 is situated close to the ventilation system 201 at the moment of configuration, so that the location data of the installer's device 200 which are obtained in step 212 and which will be used in step 213 to obtain a location-specific list of questions are indicative of the location of the ventilation system 201.

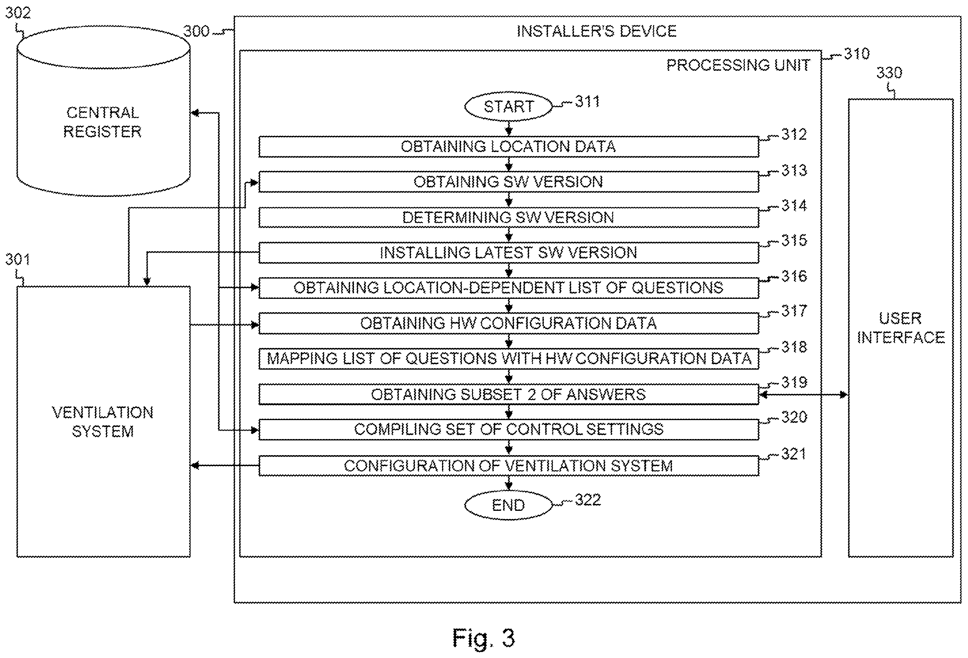

Fig. 3 illustrates a third embodiment of the installer's device 300 and the method 311-322 for configuring a ventilation system 301 according to the invention. The installer's device 300 comprises a processing unit 310 and a user interface 330. By means of a computer program product, the processing unit 310 is configured in such a way that the steps 311-322 are carried out. In addition to the installer's device 300, Fig. 3 also shows the ventilation system 301 which is to be configured and a central register 302 which forms part of, for example, a cloud storage system and can be consulted by the installer's device 300 via the internet. The steps 311-312 and 316-322 of this third embodiment correspond to the respective steps 111-119 of the first embodiment described above with reference to Fig. 1. However, this third embodiment differs from the first embodiment in steps 313-315 in which a prior verification and update of the computer programs installed on the ventilation system 301 are performed. Before the location-specific list of questions is obtained in step 316, the processing unit 310 will obtain an identification from the ventilation system 301 of the version of the computer programs which are currently installed on the ventilation system 301 in step 313. In step 314, the version information is verified. Possibly, the installer's device 300 knows which is the most recent version of the computer programs for the type of ventilation system to which ventilation system 301 belongs. If that is not the case, the installer's device can request this information from the central register 302. If the version information which was obtained in step 313 corresponds to the most recent version of the computer programs, steps 316-322 may immediately be performed. If the version information which was obtained in step n313 does not correspond to the most recent version of the computer programs, the most recent version of the computer programs is first installed on the ventilation system 301 in step 315 before the steps 316-322 are performed. If the most recent version of the computer programs is available on the installer's device 300, this most recent version can be directly transferred from the installer's device 300 to the ventilation system 301. If the most recent version of the computer programs is not present on the installer's device 300, this may be transferred to the ventilation system 301 from, for example, the central register 302. In this way, it is ensured that the ventilation system 301 is provided with the most recent version of the firmware before the system is configured in a location-specific manner.

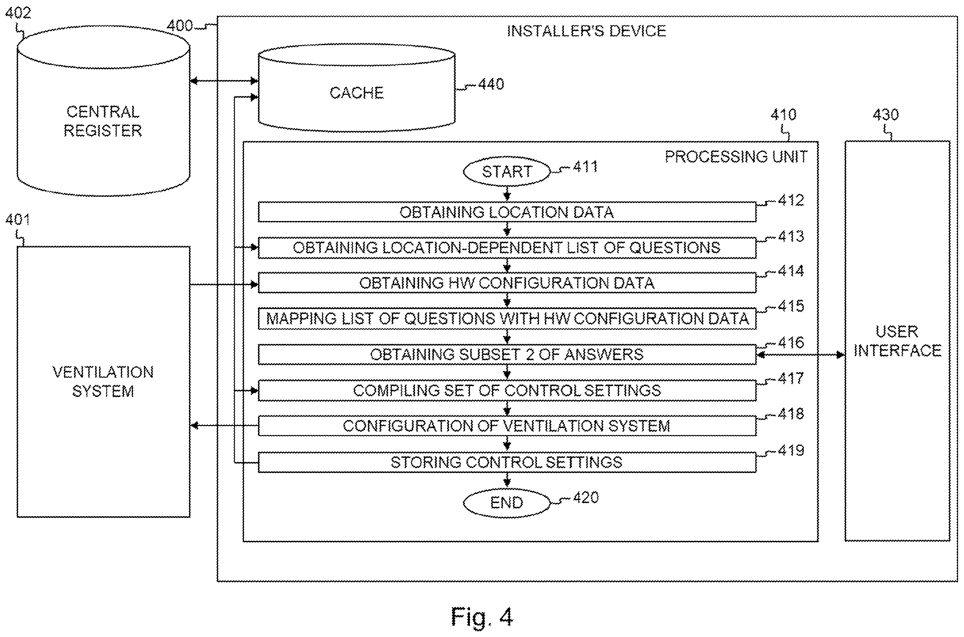

Fig. 4 illustrates a fourth embodiment of the installer's device 400 and the method 411-420 for configuring a ventilation system 401 according to the invention. The installer's device 400 comprises a processing unit 410 and a user interface 430. By means of a computer program, the processing unit 410 is configured in such a way that the steps 411-420 are performed. In addition to the installer's device 400, Fig. 4 also shows the ventilation system 401 which is to be configured and a central register 402 which forms part of, for example, a cloud storage system and can be consulted by the installer's device 400 via the internet. The steps 411-418 and 420 of this fourth embodiment correspond to the respective steps 111-119 of the first embodiment described above with reference to Fig. 1. However, this fourth embodiment differs from the first embodiment by the use of a cache memory 440 which is present in the installer's device 400. Prior to the configuration process, location-specific lists of questions were copied from the central register 402 to the cache memory 440. Also sets of decision parameters for specific types of valves, flow regulators and ventilators are copied to the cache memory 440 beforehand. This makes it possible to perform configuration of the ventilation system 401 even if there is no internet connection to the central register 402 at the location where the ventilation system 401 is installed, or if such an internet connection cannot be used because the installer's device 400 is, for example, only able to support one connection simultaneously and the data connection between the installer's device 400 and the ventilation system 401 prevents a simultaneous second data connection between the installer's device 400 and the central register 402 to be established. In the fourth embodiment, the processing unit 410 will then also receive the location-specific list of questions from the cache memory 440 in step 413, and compiling the control settings in step 417 will also be performed on the basis of sets of decision parameters for types of valves, flow regulators and ventilators which are obtained from the cache memory 440. After the ventilation system 401 has been configured in step 418, the control settings which were used for the configuration in step 419 are stored in the cache memory 440. In this way, the control settings for the type of ventilation system to which ventilation system 401 belongs and for the location where ventilation system 401 is installed are stored on the installer's device 400 and the installer is able to retrieve these control settings and re-use them in order to configure a similar ventilation system installed in the same street, quarter or region quickly in accordance with the local standards which are in force.

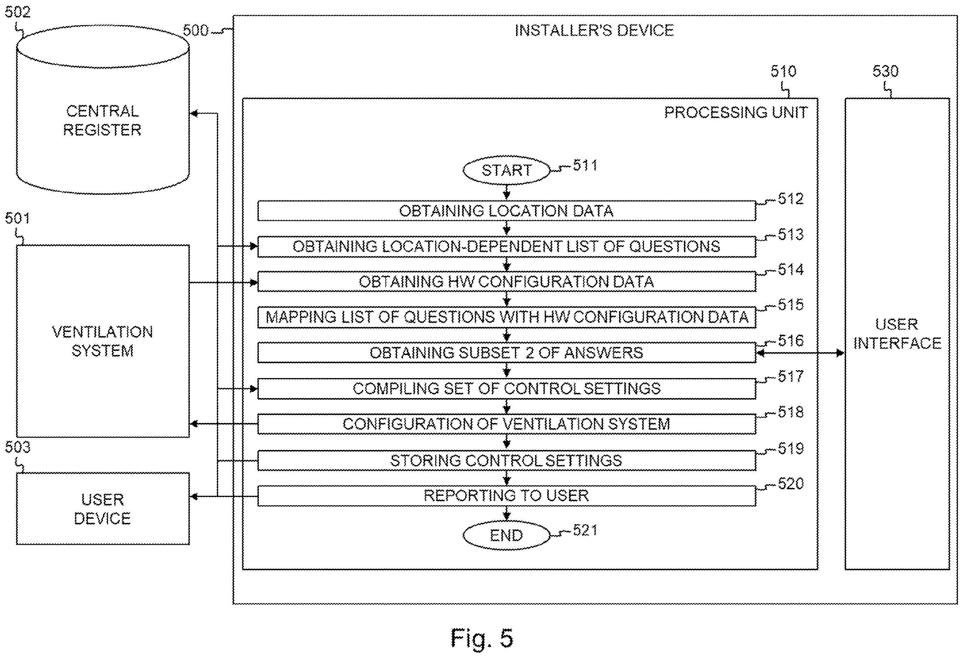

Fig. 5 illustrates a fifth embodiment of the installer's device 500 and the method 511-521 for configuring a ventilation system 501 according to the invention. The installer's device 500 comprises a processing unit 510 and a user interface 530. By means of a computer program, the processing unit 510 is configured in such a way that the steps 511-521 are carried out. In addition to the installer's device 500, Fig. 5 also shows the ventilation system 501 which is to be configured, a central register 502 which, for example, forms part of a cloud storage system and can be consulted by the installer's device 500 via the internet, and a user device. The steps 511-518 and 521 of this fifth embodiment correspond to the respective steps 111-119 of the first embodiment described above with reference to Fig. 1. However, this fifth embodiment differs from the first embodiment in that the control settings are stored and the configuration is reported to the user device 503, for example a smartphone, tablet computer, laptop computer or desktop computer of the owner of the building in which the ventilation system 501 is installed. In contrast to the fourth embodiment, the control settings which are used for configuring the ventilation system 501 are not stored in a cache memory of the installer's device 500, but are stored in the central register 502 in step 519. In this way, the control settings are made available in a centralized way and can be used by other installers which have access to the same central register 502 via their installer's device to configure similar ventilation systems in the same region. In step 520, the configuration is also reported to the user device 503. In a typical setting, the installer's device 500 will not connect directly with the user device 503, but reporting in step 520 will proceed via the central register 502 which forms part of a cloud storage system which is accessible via the internet. In possible embodiments, reporting to the user in step 520 may also comprise the control settings themselves, so that the location-specific control settings which were used to configure the ventilation system 501 are eventually also received by the user and can be stored locally on the user device 503.

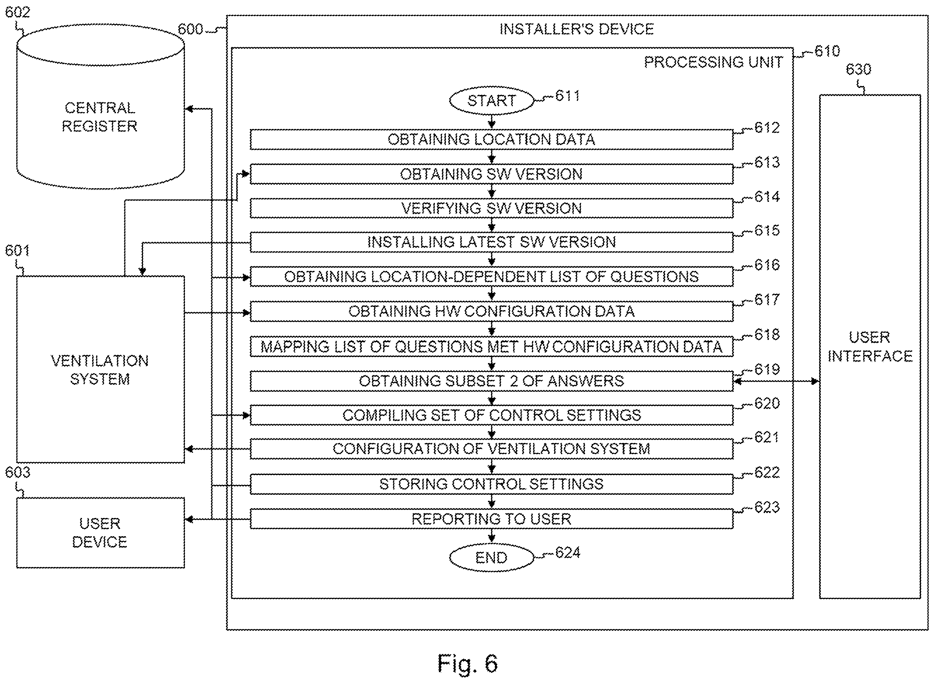

Fig. 6 illustrates a sixth embodiment of the installer's device 600 and the method 611-624 for configuring a ventilation system 601 according to the invention. The installer's device 600 comprises a processing unit 610 and a user interface 630. By means of a computer program, the processing unit 610 is configured in such a way that the steps 611-624 are carried out. In addition to the installer's device 600, Fig. 6 also shows the ventilation system 601 which is to be configured, a central register 602 which forms part of, for example, a cloud storage system and can be consulted by the installer's device 600 via the internet, and a user device 603. The steps 611-612, 616-621 and 624 of this sixth embodiment correspond to the respective steps 111-119 of the first embodiment described above with reference to Fig. 1. However, this sixth embodiment differs from the first embodiment in the steps 613-615 in which a prior verification and update of the computer programs installed on the ventilation system 601 is carried out, step 622 in which the control settings are stored in the central register 602, and step 623 in which the configuration is reported to the user device 603. The sixth embodiment thus combines the steps of the third embodiment illustrated by Fig. 3 and the steps of the fifth embodiment illustrated by Fig. 5.

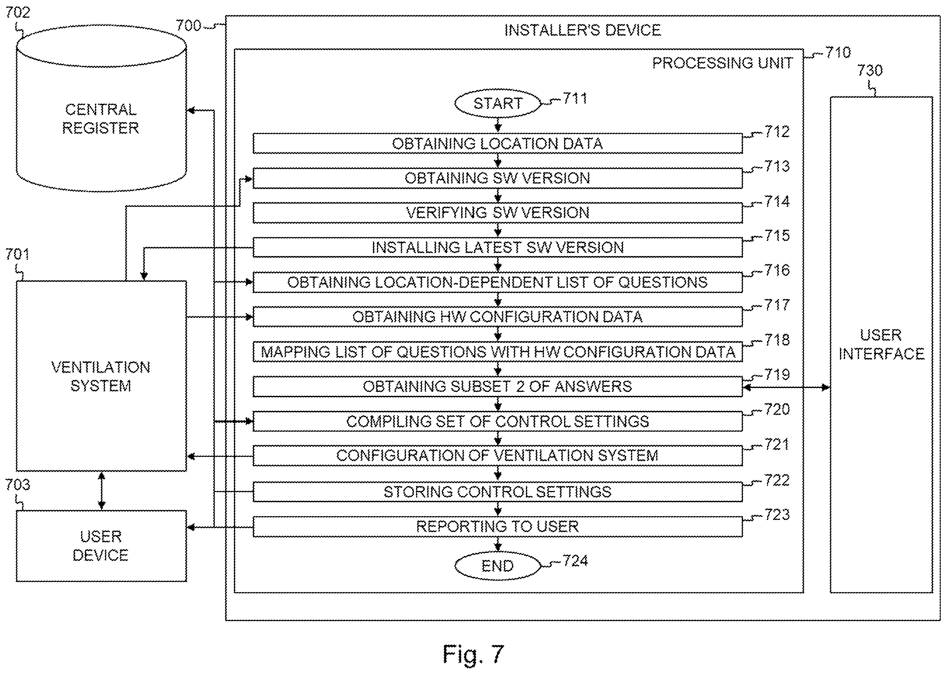

Fig. 7 illustrates a seventh embodiment of the installer's device 700 and the method 711-724 for configuring a ventilation system 701 according to the invention. The installer's device 700 comprises a processing unit 710 and a user interface 730. By means of a computer program, the processing unit 710 is configured in such a way that the steps 711-724 are carried out. In addition to the installer's device 700, Fig. 7 also shows the ventilation system 701 which is to be configured, a central register 702 which forms part of, for example, a cloud storage system and can be consulted by the installer's device 700 via the internet, and a user device 703. The steps 711-724 of this seventh embodiment correspond to the respective steps 611-624 of the sixth embodiment described above with reference to Fig. 6. However, this seventh embodiment differs from the sixth embodiment in that the parameter values from the location-specific set of control settings can be updated via the user device 703. It is possible that the parameter values which were initially configured on the ventilation system 701 have to be updated as a result of a defect, repair, power cut, restart of the ventilation system 701, etc., but also as a result of changes in the standards or requirements in the country or the region where the ventilation system 701 is installed. Such an update may be prepared on an installer's device 700, following which the new location-specific set of control settings may be configured on the ventilation system 701 via the user device 703 of a user who is situated in the vicinity of the ventilation system 701. The update of the configuration parameter values may also be prepared in the central register 702, so that it can then be transferred directly to the ventilation system 701 via the internet or can be transferred to the ventilation system 701 via the user device 703.

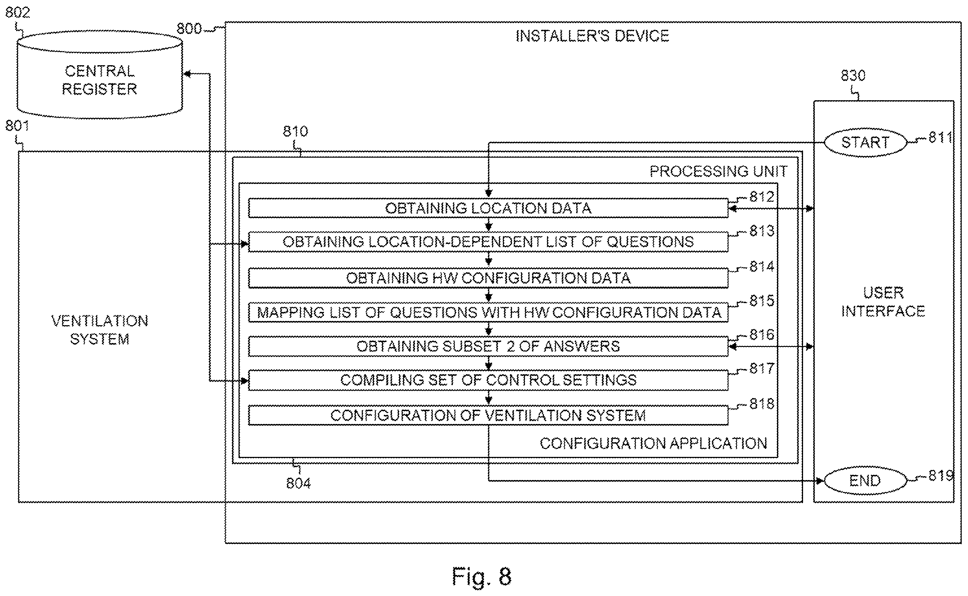

Fig. 8 illustrates an eighth embodiment of the installer's device 800 and the method 811-819 for configuring a ventilation system 801 according to the invention. The installer's device 800 comprises a processing unit 810 and a user interface 830. By means of a computer program product, the installer's device is configured in such a way that the steps 811-819 are carried out. In addition to the installer's device 800, Fig. 8 also shows the ventilation system 801 which is to be configured and a central register 802 which forms part of, for example, a cloud storage system and can be consulted by the installer's device 800 via the internet. The steps 811-819 of this eighth embodiment correspond to the steps 111-119 of the first embodiment described above with reference to Fig. 1. However, this eighth embodiment differs from the first embodiment in that the installer's device 800 comprises a configuration application 804 which is executed on processing unit 810 which, in this eighth embodiment, is incorporated in the ventilation system 801. This eighth embodiment furthermore comprises an installer's application which is executed on a separate apparatus, for example a portable apparatus which the installer carries with him. In this eighth embodiment, the installer's application is essentially reduced to a user interface 830 which connects, via an interface, with the configuration application 804 which is executed on a processing unit 810 in the ventilation system 801. In this eighth embodiment, the configuration process is started on the user interface 830 by the installer in step 811. The configuration application 804 which is hosted by the ventilation system 801 will then, in step 812, receive location data. In the embodiment illustrated in Fig. 8, this happens by asking the installer for information via the user interface 830, but the person skilled in the art will understand that alternative implementations may receive the location data from a location-detecting unit in the portable apparatus of the installer, in the ventilation system 801 or in peripheral equipment of the ventilation system 801. In this eighth embodiment, the configuration application 804 receives the location-specific list of questions in step 813 from the central register 802 and obtaining answers to questions from the location-specific list of questions is handled via the interface of the configuration application 804. In step 814, the configuration application 804 receives the system-specific hardware configuration data. These hardware configuration data are requested from another component of the ventilation system by the configuration application 804 or they were pre-programmed, for example in a web page which forms part of the configuration application 804. The automatic mapping of the hardware configuration data with the location-specific list of questions in step 815 is also performed on the configuration application 804 which forms part of the installer's device 800, but is hosted by the ventilation system 801 itself. In case of preprogramming, this step 815 is reduced to determining for which questions from the location-specific list of questions an answer was preprogrammed in the web page - the first subset - and for which questions from the location-specific list of questions no answer was preprogrammed yet - the second subset. In step 816, the second subset of questions is presented to the installer via the interface of the configuration application 804 and the user interface 830 which forms part of the installer's application which is executed on the portable apparatus of the installer. The answers to the second subset of questions are received from the installer and transferred to the web page via the interface of the configuration application 804, so that the answers to all questions from the location-specific list of questions are collected there. These answers allow the configuration application 804 to compile a set of control settings in step 817, specifically for the ventilation system 801 and specifically for the location where the ventilation system 801 is situated. In order to compile the set of control settings in step 817, the configuration application 804 uses sets of decision parameters for a certain type of valve, flow regulator or ventilator which are obtained from the central register 802 via the internet, and are duplicated and/or modified if the same valve, flow regulator or ventilator is used for several rooms. Finally, the configuration application will use the set of control settings in step 818 to configure the ventilation system 801 in accordance with the local standards in force. The process is terminated by an alert message to the installer via the installer's interface 830, as is indicated in step 819.

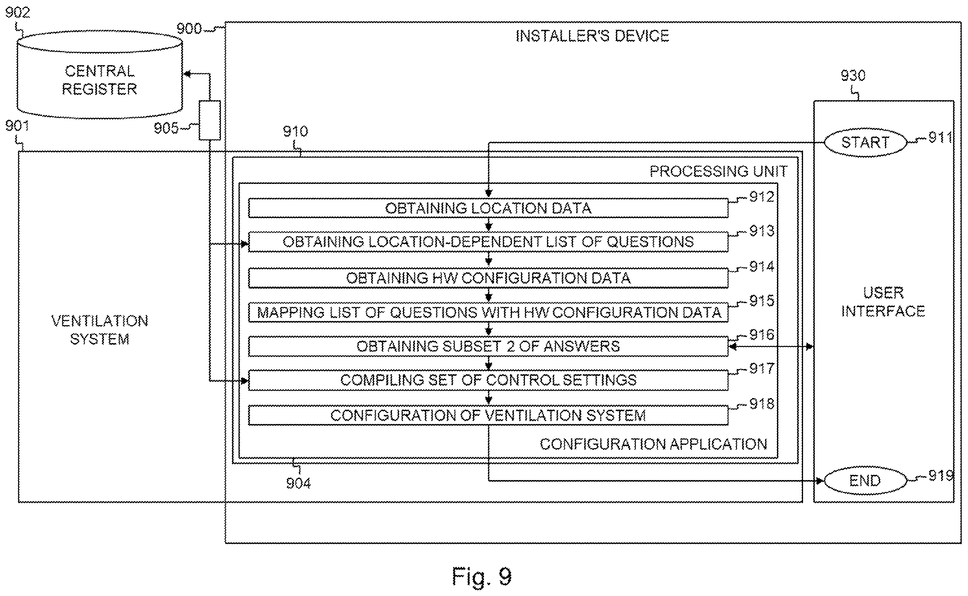

Fig. 9 illustrates a ninth embodiment of the installer's device 900 and the method 911-919 for configuring a ventilation system 901 according to the invention in which it is assumed that there is no internet connectivity available for the ventilation system 901, whereas this ventilation system 901 does execute the configuration application 904 which implements most steps from the method 911-919. The installer's device 900 comprises a processing unit 910 and a user interface 930. By means of a computer program product, the installer's device 900 is configured in such a way that the steps 911-919 are carried out. In addition to the installer's device 900, Fig. 9 also shows the ventilation system 901 which is to be configured and a central register 902 which forms part of, for example, a cloud storage system. The steps 911-919 of this ninth embodiment correspond to the steps 811-819 of the eighth embodiment described above with reference to Fig. 8. However, this ninth embodiment differs from the eighth embodiment in that the ventilation system 901 cannot connect to the central register 902 via the internet. For this reason, location-specific lists of questions for the type of ventilation system to which ventilation system 901 belongs are installed on a portable memory 905 beforehand, for example a USB memory. Likewise, the sets of decision parameters for valves, flow regulators and ventilators which in a ventilation system of the type to which ventilation system 901 belongs are transferred to the portable memory 905 beforehand, and for several possible locations. Optionally, it is also possible to install the latest version of the firmware for the type of ventilation system to which ventilation system 901 belongs on the portable memory 905. The portable memory 905 is handed to the installer who is given the task to configure the ventilation system 901 according to the local standards in force, and it is assumed that the ventilation system 901 is provided with the required interface(s) to receive the portable memory 905. After obtaining the location data in step 912, the configuration application 904 will obtain the location-specific list of questions in step 913 by selecting the location-specific list of questions corresponding to the location data and present on the portable memory 905. After the answers to the questions from the location-specific list of questions were obtained in steps 914-916, the configuration application will compile the set of control settings by using sets of decision parameters for valves, flow regulators and ventilators which are present on the portable memory 905 and are selected on the basis of the answers to the location-specific list of questions, and which are subsequently duplicated and/or modified in accordance with locally applicable standards in case certain valves, flow regulators or ventilators are used for several rooms. The actual configuration is carried out in step 918. Optionally, a check may be performed at the start of the configuration process with regard to the firmware version on the ventilation system 901 and a firmware update may be carried out if the portable memory 905 has a more recent version of the firmware, in the same way as in the third embodiment, the sixth embodiment and the seventh embodiment described above.

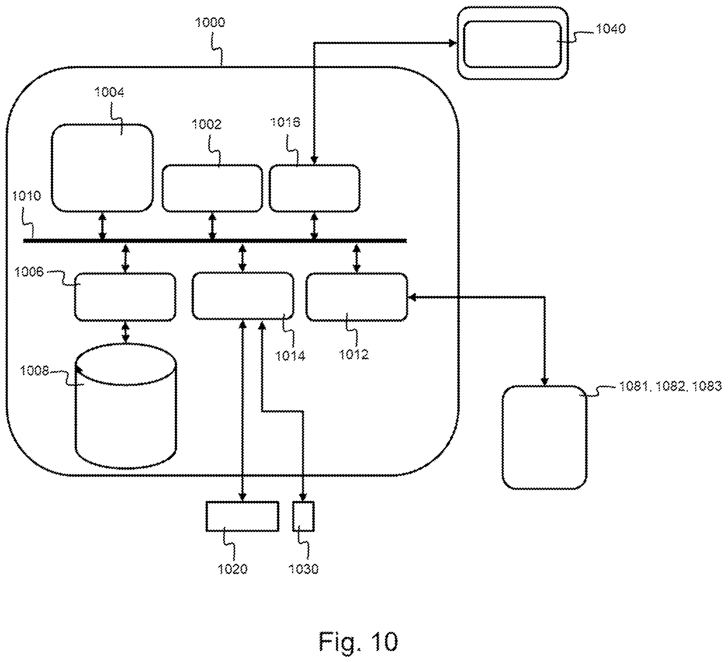

Fig. 10 shows a suitable computer system 1000 for performing one or more steps in the method of the above embodiment(s). Computer system 1000 may generally be configured as a general-purpose computer and comprise a bus 1010, a processor 1002, a local memory 1004, one or more optional input interfaces 1014, one or more output interfaces 1016, a communication interface 1012, a storage element interface 1006 and one or more storage elements 1008. Bus 1010 may comprise one or more busbars which make communication between the components of the computer system 1000 possible. Processor 1002 may comprise any type of conventional processor or microprocessor which interprets and carries out program instructions. Local memory 1004 may comprise a Random Access Memory (RAM) or another type of dynamic storage device which stores information and instructions to be performed by processor 1002, and/or comprise a Read-Only Memory (ROM) or another type of static storage device which stores static information and instructions for use by processor 1002. Input interface 1014 may comprise one or more conventional mechanisms which enable an operator to input information in the computer device 1000, such as a keyboard 1020, a mouse 1030, a pen, voice recognition and/or biometric mechanisms, a touchscreen, etc. Output interface 1016 may comprise one or more conventional mechanisms which provide information to the operator, such as a screen 1040, a printer 1050, a loudspeaker, etc. Communication interface 1012 may comprise a transceiver-type mechanism, such as for example one or more Ethernet interfaces, which allows the computer system 1000 to communicate with other devices and/or systems 1081, 1082, 1083, for example a transceiver for communicating with the ventilation system 101 in Fig. 1. The communication interface 1012 of computer system 1000 may be connected to another computer system by means of a Local Area Network (LAN) or a Wide Area Network (WAN), such as for example the internet. Storage element interface 1006 may comprise a storage interface, such as for example a Serial Advanced Technology Attachment (SATA) interface or a Small Computer System Interface (SCSI), for connecting bus 1010 to one or more storage elements 1008, such as one or more local discs, for example SATA disc stations, and for controlling the reading and writing of data from and/or to these storage elements 1008. Although the above storage elements 908 are described as being a local disc, any other suitable computer-readable medium, such as a removable magnetic disc, optical storage media, such as a CD or DVD, ROM disc, solid-state drives, flash-memory cards, could generally be used. The above-described system 1000 may also be like a Virtual Machine beyond the physical hardware.

The steps shown in the above embodiment(s) may be implemented as program instructions which are stored in local memory 1004 of the computer system 1000 in order for the processor 1002 to execute them. Alternatively, the instruction may be stored on the storage element 1008 or be accessible from another computer system via the communication interface 1012.

Although the present invention has been illustrated by means of specific embodiments, it will be clear to the person skilled in the art that the invention is not limited to the details of the above illustrative embodiments, and that the present invention can be implemented with various changes and modifications without departing from the scope of the invention. The present embodiments therefore have to be regarded in all respects as being illustrative and non-limiting, and the scope of the invention is defined by the attached claims and not by the above description, and any changes which fall within the scope of the claims are therefore covered by the invention.

## Claims

1. A computer-implemented method for configuring a ventilation system (101; 201; 301; 401; 501; 601; 701; 801; 901), the method comprising the following steps, steps carried out on an installer's device (100; 200; 300; 400; 500; 600; 700; 800; 900) with data connectivity to said ventilation system (101; 201; 301; 401; 501; 601; 701; 801; 901):
- obtaining (112; 212; 312; 412; 512; 612; 712; 812; 912) location data indicative of the location where said ventilation system (101; 201; 301; 401; 501; 601; 701; 801; 901) is installed,
**CHARACTERISED IN THAT** said method further comprises the following steps:
- obtaining (113; 213; 316; 413; 513; 616; 716; 813; 913) a location-specific list of questions for said ventilation system (101; 201; 301; 401; 501; 601; 701; 801; 901) using said location data;
- obtaining (114; 214; 317; 414; 514; 617; 717; 814; 914) hardware configuration data for said ventilation system (101; 201; 301; 401; 501; 601; 701; 801; 901), wherein the hardware configuration data are acquired automatically by asking said ventilation system via a data connection between said installer's device and said ventilation system;
- mapping (115; 215; 318; 415; 515; 618; 718; 815; 915) said hardware configuration data on questions from said location-specific list of questions to generate a first subset of answers to a first subset of questions from said location-specific list of questions;
- obtaining (116; 216; 319; 416; 516; 619; 719; 816; 916) a second subset of answers to a second subset of questions from said location-specific list of questions via a user interface (130; 230; 330; 430; 530; 630; 730; 830; 930) which remained unanswered after said mapping (115; 215; 318; 415; 515; 618; 718; 815; 915) of said hardware configuration data on said location-specific list of questions;
- compiling (117; 217; 320; 417; 517; 620; 720; 817; 917) a set of location-specific control settings comprising parameter values for configuring said ventilation system (101; 201; 301; 401; 501; 601; 701; 801; 901) and said location data, on the basis of said first subset of answers and said second subset of answers to said location-specific list of questions; and
- configuring (118; 218; 321; 418; 518; 621; 721; 818; 918) said ventilation system (101; 201; 301; 401; 501; 601; 701; 801; 901) using the parameter values from said set of location-specific control settings.

2. The method for configuring a ventilation system (101; 201; 301; 401; 501; 601; 701; 801; 901) as claimed in claim 1, wherein said location data are obtained from a positioning unit (240) inside said installer's device (100; 200; 300; 400; 500; 600; 700; 800; 900).

3. The method for configuring a ventilation system (101; 201; 301; 401; 501; 601; 701; 801; 901) as claimed in claim 1, wherein said location data are obtained from a positioning unit which is outside said installer's device (100; 200; 300; 400; 500; 600; 700; 800; 900).

4. The method for configuring a ventilation system (101; 201; 301; 401; 501; 601; 701; 801; 901) as claimed in claim 1, wherein said location data are obtained via said user interface (130; 230; 330; 430; 530; 630; 730; 830; 930).

5. The method for configuring a ventilation system (101; 201; 301; 401; 501; 601; 701; 801; 901) as claimed in claim 1, wherein said location data are obtained from said ventilation system (101; 201; 301; 401; 501; 601; 701; 801; 901) or peripheral equipment of said ventilation system (101; 201; 301; 401; 501; 601; 701; 801; 901).

6. The method for configuring a ventilation system (101; 201; 301; 401; 501; 601; 701; 801; 901) as claimed in one of the preceding claims, furthermore comprising the following steps before said obtaining (113; 213; 316; 413; 513; 616; 716; 813; 913) of a location-specific list of questions:
- obtaining (313; 613; 713) a version identification of the software installed on said ventilation system (101; 201; 301; 401; 501; 601; 701; 801; 901);
- verifying (314; 614; 714) said version identification against the version identification of the most recent version of said software; and
- installing (315; 615; 715) said most recent version of said software on said ventilation system (101; 201; 301; 401; 501; 601; 701; 801; 901) if said version identification does not correspond to said version identification of said most recent version.

7. The method for configuring a ventilation system (101; 201; 301; 401; 501; 601; 701; 801; 901) as claimed in one of the preceding claims, furthermore comprising:
- storing (419; 519; 622; 722) said location-specific set of control settings in connection with said ventilation system (101; 201; 301; 401; 501; 601; 701; 801; 901) and said location data.

8. The method for configuring a ventilation system (101; 201; 301; 401; 501; 601; 701; 801; 901) as claimed in one of the preceding claims, furthermore comprising:
- reporting (520; 623; 723) said configuring (118; 218; 321; 418; 518; 621; 721; 818; 918) of said ventilation system (101; 201; 301; 401; 501; 601; 701; 801; 901) to a user device (503; 603; 703).

9. The method for configuring a ventilation system (101; 201; 301; 401; 501; 601; 701; 801; 901) as claimed in claim 5 and claim 7, in which said configuring (118; 218; 321; 418; 518; 621; 721; 818; 918) of said ventilation system (101; 201; 301; 401; 501; 601; 701; 801; 901) using the parameter values from said location-specific set of control settings is performed via said user device (503; 603; 703).

10. The method for configuring a ventilation system (101; 201; 301; 401; 501; 601; 701; 801; 901) as claimed in claim 9, in which updating the parameter values of said location-specific set of control settings on said ventilation system (101; 201; 301; 401; 501; 601; 701; 801; 901) is performed via said user device (503; 603; 703) or directly from a central register (102; 202; 302; 402; 502; 602; 702; 802; 902).

11. An installer's device (100; 200; 300; 400; 500; 600; 700; 800; 900) with data connectivity to a ventilation system (101; 201; 301; 401; 501; 601; 701; 801; 901), adapted to configure said ventilation system (101; 201; 301; 401; 501; 601; 701; 801; 901), said installer's device (100; 200; 300; 400; 500; 600; 700; 800; 900) comprising a processing unit (110; 210; 310; 410; 510; 610; 710; 810; 910) and a memory with a computer program which is adapted to allow the installer's device (100; 200; 300; 400; 500; 600; 700; 800; 900) to perform the following steps:
- obtaining (112; 212; 312; 412; 512; 612; 712; 812; 912) location data indicative of the location where said ventilation system (101; 201; 301; 401; 501; 601; 701; 801; 901) is installed,
**CHARACTERISED IN THAT** said installer's device is further adapted to perform the following steps:
- obtaining (113; 213; 316; 413; 513; 616; 716; 813; 913) a location-specific list of questions for said ventilation system (101; 201; 301; 401; 501; 601; 701; 801; 901) using said location data;
- obtaining (114; 214; 317; 414; 514; 617; 717; 814; 914) hardware configuration data for said ventilation system (101; 201; 301; 401; 501; 601; 701; 801; 901), wherein the hardware configuration data are acquired automatically by asking said ventilation system via a data connection between said installer's device and said ventilation system;
- mapping (115; 215; 318; 415; 515; 618; 718; 815; 915) said hardware configuration data on questions from said location-specific list of questions to generate a first subset of answers to a first subset of questions from said location-specific list of questions;
- obtaining (116; 216; 319; 416; 516; 619; 719; 816; 916), via a user interface (130; 230; 330; 430; 530; 630; 730; 830; 930), a second subset of answers to a second subset of questions from said location-specific list of questions which remained unanswered after said mapping (115; 215; 318; 415; 515; 618; 718; 815; 915) of said hardware configuration data on said location-specific list of questions;
- compiling (117; 217; 320; 417; 517; 620; 720; 817; 917) a set of location-specific control settings comprising parameter values for configuring said ventilation system (101; 201; 301; 401; 501; 601; 701; 801; 901) and said location data, on the basis of said first subset of answers and said second subset of answers to said location-specific list of questions; and
- configuring (118; 218; 321; 418; 518; 621; 721; 818; 918) said ventilation system (101; 201; 301; 401; 501; 601; 701; 801; 901) using the parameter values from said set of location-specific control settings.

12. A computer program product comprising computer-implementable instructions to perform the following steps when executed on a computer:
- obtaining (112; 212; 312; 412; 512; 612; 712; 812; 912) location data indicative of the location where a ventilation system (101; 201; 301; 401; 501; 601; 701; 801; 901) is installed,
**CHARACTERISED IN THAT** said computer program product further comprises computer-implementable instructions to perform the following steps:
- obtaining (113; 213; 316; 413; 513; 616; 716; 813; 913) a location-specific list of questions for said ventilation system (101; 201; 301; 401; 501; 601; 701; 801; 901) using said location data;
- obtaining (114; 214; 317; 414; 514; 617; 717; 814; 914) hardware configuration data for said ventilation system (101; 201; 301; 401; 501; 601; 701; 801; 901), wherein the hardware configuration data are acquired automatically by asking said ventilation system via a data connection between an installer's device and said ventilation system;
- mapping (115; 215; 318; 415; 515; 618; 718; 815; 915) said hardware configuration data on questions from said location-specific list of questions to generate a first subset of answers to a first subset of questions from said location-specific list of questions;
- obtaining (116; 216; 319; 416; 516; 619; 719; 816; 916), via a user interface (130; 230; 330; 430; 530; 630; 730; 830; 930), a second subset of answers to a second subset of questions from said location-specific list of questions which remained unanswered after said mapping (115; 215; 318; 415; 515; 618; 718; 815; 915) of said hardware configuration data on said location-specific list of questions;
- compiling (117; 217; 320; 417; 517; 620; 720; 817; 917) a set of location-specific control settings comprising parameter values for configuring said ventilation system (101; 201; 301; 401; 501; 601; 701; 801; 901) and said location data, on the basis of said first subset of answers and said second subset of answers to said location-specific list of questions; and
- configuring (118; 218; 321; 418; 518; 621; 721; 818; 918) said ventilation system (101; 201; 301; 401; 501; 601; 701; 801; 901) using the parameter values from said set of location-specific control settings.

13. A computer-readable storage means comprising the computer program product as claimed in claim 12.

## Patentansprüche

1. Computerimplementiertes Verfahren zum Konfigurieren eines Belüftungssystems (101; 201; 301; 401; 501; 601; 701; 801; 901), wobei das Verfahren die folgenden Schritte, Schritte, die auf einem Installateurgerät (100; 200; 300; 400; 500; 600; 700; 800; 900) mit Datenanbindung an das Belüftungssystem (101; 201; 301; 401; 501; 601; 701; 801; 901) ausgeführt werden, umfasst:
- Erhalten (112; 212; 312; 412; 512; 612; 712; 812; 912) von Standortdaten, die für den Standort bezeichnend sind, an dem das Belüftungssystem (101; 201; 301; 401; 501; 601; 701; 801; 901) installiert ist,
**DADURCH GEKENNZEICHNET, DASS** das Verfahren ferner die folgenden Schritte umfasst:
- Erhalten (113; 213; 316; 413; 513; 616; 716; 813; 913) eines standortspezifischen Fragenkatalogs für das Belüftungssystem (101; 201; 301; 401; 501; 601; 701; 801; 901) unter Verwendung der Standortdaten;
- Erhalten (114; 214; 317; 414; 514; 617; 717; 814; 914) von Hardwarekonfigurationsdaten für das Belüftungssystem (101; 201; 301; 401; 501; 601; 701; 801; 901), wobei die Hardwarekonfigurationsdaten automatisch durch Befragen des Belüftungssystems über eine Datenverbindung zwischen dem Installateurgerät und dem Belüftungssystem erfasst werden;
- Zuordnen (115; 215; 318; 415; 515; 618; 718; 815; 915) der Hardwarekonfigurationsdaten zu Fragen aus dem standortspezifischen Fragenkatalog, um einen ersten Teilsatz von Antworten auf einen ersten Teilsatz von Fragen aus dem standortspezifischen Fragenkatalog zu generieren;
- Erhalten (116; 216; 319; 416; 516; 619; 719; 816; 916) eines zweiten Teilsatzes von Antworten auf einen zweiten Teilsatz von Fragen aus dem standortspezifischen Fragenkatalog über eine Benutzerschnittstelle (130; 230; 330; 430; 530; 630; 730; 830; 930), die nach dem Zuordnen (115; 215; 318; 415; 515; 618; 718; 815; 915) der Hardwarekonfigurationsdaten zu dem standortspezifischen Fragenkatalog unbeantwortet blieben;
- Zusammenstellen (117; 217; 320; 417; 517; 620; 720; 817; 917) eines Satzes standortspezifischer Steuereinstellungen, die Parameterwerte zum Konfigurieren des Belüftungssystems (101; 201; 301; 401; 501; 601; 701; 801; 901) und die Standortdaten umfassen, auf der Grundlage des ersten Teilsatzes von Antworten und des zweiten Teilsatzes von Antworten auf den standortspezifischen Fragenkatalog; und
- Konfigurieren (118; 218; 321; 418; 518; 621; 721; 818; 918) des Belüftungssystems (101; 201; 301; 401; 501; 601; 701; 801; 901) unter Verwendung der Parameterwerte aus dem Satz standortspezifischer Steuereinstellungen.

2. Verfahren zum Konfigurieren eines Belüftungssystems (101; 201; 301; 401; 501; 601; 701; 801; 901) nach Anspruch 1, wobei die Standortdaten von einer Positionierungseinheit (240) im Installateurgerät (100; 200; 300; 400; 500; 600; 700; 800; 900) erhalten werden.

3. Verfahren zum Konfigurieren eines Belüftungssystems (101; 201; 301; 401; 501; 601; 701; 801; 901) nach Anspruch 1, wobei die Standortdaten von einer Positionierungseinheit erhalten werden, die sich außerhalb des Installateurgeräts (100; 200; 300; 400; 500; 600; 700; 800; 900) befindet.

4. Verfahren zum Konfigurieren eines Belüftungssystems (101; 201; 301; 401; 501; 601; 701; 801; 901) nach Anspruch 1, wobei die Standortdaten über die Benutzerschnittstelle (130; 230; 330; 430; 530; 630; 730; 830; 930) erhalten werden.

5. Verfahren zum Konfigurieren eines Belüftungssystems (101; 201; 301; 401; 501; 601; 701; 801; 901) nach Anspruch 1, wobei die Standortdaten von dem Belüftungssystem (101; 201; 301; 401; 501; 601; 701; 801; 901) oder Peripherieausstattung des Belüftungssystems (101; 201; 301; 401; 501; 601; 701; 801; 901) erhalten werden.

6. Verfahren zum Konfigurieren eines Belüftungssystems (101; 201; 301; 401; 501; 601; 701; 801; 901) nach einem der vorhergehenden Ansprüche, außerdem umfassend die folgenden Schritte vor dem Erhalten (113; 213; 316; 413; 513; 616; 716; 813; 913) eines standortspezifischen Fragenkatalogs:
- Erhalten (313; 613; 713) einer Versionsidentifikation der auf dem Belüftungssystem (101; 201; 301; 401; 501; 601; 701; 801; 901) installierten Software;
- Verifizieren (314; 614; 714) der Versionsidentifikation gegenüber der Versionsidentifikation der aktuellsten Version der Software; und
- Installieren (315; 615; 715) der aktuellsten Version der Software auf dem Belüftungssystem (101; 201; 301; 401; 501; 601; 701; 801; 901), wenn die Versionsidentifikation nicht der Versionsidentifikation der aktuellsten Version entspricht.

7. Verfahren zum Konfigurieren eines Belüftungssystems (101; 201; 301; 401; 501; 601; 701; 801; 901) nach einem der vorhergehenden Ansprüche, außerdem umfassend:
- Speichern (419; 519; 622; 722) des standortspezifischen Satzes von Steuereinstellungen in Verbindung mit dem Belüftungssystem (101; 201; 301; 401; 501; 601; 701; 801; 901) und den Standortdaten.

8. Verfahren zum Konfigurieren eines Belüftungssystems (101; 201; 301; 401; 501; 601; 701; 801; 901) nach einem der vorhergehenden Ansprüche, außerdem umfassend:
- Melden (520; 623; 723) des Konfigurierens (118; 218; 321; 418; 518; 621; 721; 818; 918) des Belüftungssystems (101; 201; 301; 401; 501; 601; 701; 801; 901) an ein Benutzergerät (503; 603; 703).

9. Verfahren zum Konfigurieren eines Belüftungssystems (101; 201; 301; 401; 501; 601; 701; 801; 901) nach Anspruch 5 und Anspruch 7, bei dem das Konfigurieren (118; 218; 321; 418; 518; 621; 721; 818; 918) des Belüftungssystems (101; 201; 301; 401; 501; 601; 701; 801; 901) unter Verwendung der Parameterwerte aus dem standortspezifischen Satz von Steuereinstellungen über das Benutzergerät (503; 603; 703) durchgeführt wird.

10. Verfahren zum Konfigurieren eines Belüftungssystems (101; 201; 301; 401; 501; 601; 701; 801; 901) nach Anspruch 9, bei dem das Aktualisieren der Parameterwerte des standortspezifischen Satzes von Steuereinstellungen am Belüftungssystem (101; 201; 301; 401; 501; 601; 701; 801; 901) über das Benutzergerät (503; 603; 703) oder direkt von einem zentralen Register (102; 202; 302; 402; 502; 602; 702; 802; 902) aus durchgeführt wird.

11. Installateurgerät (100; 200; 300; 400; 500; 600; 700; 800; 900) mit Datenanbindung an ein Belüftungssystem (101; 201; 301; 401; 501; 601; 701; 801; 901), das geeignet ist, das Belüftungssystem (101; 201; 301; 401; 501; 601; 701; 801; 901) zu konfigurieren, wobei das Installateurgerät (100; 200; 300; 400; 500; 600; 700; 800; 900) eine Verarbeitungseinheit (110; 210; 310; 410; 510; 610; 710; 810; 910) und einen Speicher mit einem Computerprogramm umfasst, das geeignet ist, es dem Installateurgerät (100; 200; 300; 400; 500; 600; 700; 800; 900) zu ermöglichen, die folgenden Schritte durchzuführen:
- Erhalten (112; 212; 312; 412; 512; 612; 712; 812; 912) von Standortdaten, die für den Standort bezeichnend sind, an dem das Belüftungssystem (101; 201; 301; 401; 501; 601; 701; 801; 901) installiert ist,
**DADURCH GEKENNZEICHNET, DASS** das Installateurgerät ferner geeignet ist, die folgenden Schritte durchzuführen:
- Erhalten (113; 213; 316; 413; 513; 616; 716; 813; 913) eines standortspezifischen Fragenkatalogs für das Belüftungssystem (101; 201; 301; 401; 501; 601; 701; 801; 901) unter Verwendung der Standortdaten;
- Erhalten (114; 214; 317; 414; 514; 617; 717; 814; 914) von Hardwarekonfigurationsdaten für das Belüftungssystem (101; 201; 301; 401; 501; 601; 701; 801; 901), wobei die Hardwarekonfigurationsdaten automatisch durch Befragen des Belüftungssystems über eine Datenverbindung zwischen dem Installateurgerät und dem Belüftungssystem erfasst werden;
- Zuordnen (115; 215; 318; 415; 515; 618; 718; 815; 915) der Hardwarekonfigurationsdaten zu Fragen aus dem standortspezifischen Fragenkatalog, um einen ersten Teilsatz von Antworten auf einen ersten Teilsatz von Fragen aus dem standortspezifischen Fragenkatalog zu generieren;
- Erhalten (116; 216; 319; 416; 516; 619; 719; 816; 916), über eine Benutzerschnittstelle (130; 230; 330; 430; 530; 630; 730; 830; 930), eines zweiten Teilsatzes von Antworten auf einen zweiten Teilsatz von Fragen aus dem standortspezifischen Fragenkatalog, die nach dem Zuordnen (115; 215; 318; 415; 515; 618; 718; 815; 915) der Hardwarekonfigurationsdaten zu dem standortspezifischen Fragenkatalog unbeantwortet blieben;
- Zusammenstellen (117; 217; 320; 417; 517; 620; 720; 817; 917) eines Satzes standortspezifischer Steuereinstellungen, die Parameterwerte zum Konfigurieren des Belüftungssystems (101; 201; 301; 401; 501; 601; 701; 801; 901) und die Standortdaten umfassen, auf der Grundlage des ersten Teilsatzes von Antworten und des zweiten Teilsatzes von Antworten auf den standortspezifischen Fragenkatalog; und
- Konfigurieren (118; 218; 321; 418; 518; 621; 721; 818; 918) des Belüftungssystems (101; 201; 301; 401; 501; 601; 701; 801; 901) unter Verwendung der Parameterwerte aus dem Satz standortspezifischer Steuereinstellungen.

12. Computerprogrammprodukt, umfassend computerimplementierbare Anweisungen, um bei Ausführung auf einem Computer die folgenden Schritte durchzuführen:
- Erhalten (112; 212; 312; 412; 512; 612; 712; 812; 912) von Standortdaten, die für den Standort bezeichnend sind, an dem ein Belüftungssystem (101; 201; 301; 401; 501; 601; 701; 801; 901) installiert ist,
**DADURCH GEKENNZEICHNET, DASS** das Computerprogrammprodukt ferner computerimplementierbare Anweisungen zum Durchführen der folgenden Schritte umfasst:
- Erhalten (113; 213; 316; 413; 513; 616; 716; 813; 913) eines standortspezifischen Fragenkatalogs für das Belüftungssystem (101; 201; 301; 401; 501; 601; 701; 801; 901) unter Verwendung der Standortdaten;
- Erhalten (114; 214; 317; 414; 514; 617; 717; 814; 914) von Hardwarekonfigurationsdaten für das Belüftungssystem (101; 201; 301; 401; 501; 601; 701; 801; 901), wobei die Hardwarekonfigurationsdaten automatisch durch Befragen des Belüftungssystems über eine Datenverbindung zwischen dem Installateurgerät und dem Belüftungssystem erfasst werden;
- Zuordnen (115; 215; 318; 415; 515; 618; 718; 815; 915) der Hardwarekonfigurationsdaten zu Fragen aus dem standortspezifischen Fragenkatalog, um einen ersten Teilsatz von Antworten auf einen ersten Teilsatz von Fragen aus dem standortspezifischen Fragenkatalog zu generieren;
- Erhalten (116; 216; 319; 416; 516; 619; 719; 816; 916), über eine Benutzerschnittstelle (130; 230; 330; 430; 530; 630; 730; 830; 930), eines zweiten Teilsatzes von Antworten auf einen zweiten Teilsatz von Fragen aus dem standortspezifischen Fragenkatalog, die nach dem Zuordnen (115; 215; 318; 415; 515; 618; 718; 815; 915) der Hardwarekonfigurationsdaten zu dem standortspezifischen Fragenkatalog unbeantwortet blieben;
- Zusammenstellen (117; 217; 320; 417; 517; 620; 720; 817; 917) eines Satzes standortspezifischer Steuereinstellungen, die Parameterwerte zum Konfigurieren des Belüftungssystems (101; 201; 301; 401; 501; 601; 701; 801; 901) und die
Standortdaten umfassen, auf der Grundlage des ersten Teilsatzes von Antworten und des zweiten Teilsatzes von Antworten auf den standortspezifischen Fragenkatalog; und
- Konfigurieren (118; 218; 321; 418; 518; 621; 721; 818; 918) des Belüftungssystems (101; 201; 301; 401; 501; 601; 701; 801; 901) unter Verwendung der Parameterwerte aus dem Satz standortspezifischer Steuereinstellungen.

13. Computerlesbares Speichermedium, umfassend das Computerprogrammprodukt nach Anspruch 12.

## Revendications

1. Procédé mis en œuvre par ordinateur pour configurer un système de ventilation (101 ; 201 ; 301 ; 401 ; 501 ; 601 ; 701 ; 801 ; 901), le procédé comprenant les étapes suivantes, étapes effectuées sur un dispositif d'installateur (100 ; 200 ; 300 ; 400 ; 500 ; 600 ; 700 ; 800 ; 900) doté d'une connectivité de données audit système de ventilation (101 ; 201 ; 301 ; 401 ; 501 ; 601 ; 701 ; 801 ; 901) :
- obtention (112 ; 212 ; 312 ; 412 ; 512 ; 612 ; 712 ; 812 ; 912) de données de localisation indicatives de la localisation où ledit système de ventilation (101 ; 201 ; 301 ; 401 ; 501 ; 601 ; 701 ; 801 ; 901) est installé,
**CARACTÉRISÉ EN CE QUE** ledit procédé comprend en outre les étapes suivantes :
- obtention (113 ; 213 ; 316 ; 413 ; 513 ; 616 ; 716 ; 813 ; 913) d'une liste de questions spécifique à la localisation pour ledit système de ventilation (101 ; 201 ; 301 ; 401 ; 501 ; 601 ; 701 ; 801 ; 901) en utilisant lesdites données de localisation ;
- obtention (114 ; 214 ; 317 ; 414 ; 514 ; 617 ; 717 ; 814 ; 914) de données de configuration matérielle pour ledit système de ventilation (101 ; 201 ; 301 ; 401 ; 501 ; 601 ; 701 ; 801 ; 901), dans lequel les données de configuration matérielle sont acquises automatiquement par demande audit système de ventilation via une connexion de données entre ledit dispositif d'installateur et ledit système de ventilation ;
- mappage (115 ; 215 ; 318 ; 415 ; 515 ; 618 ; 718 ; 815 ; 915) desdites données de configuration matérielle sur des questions issues de ladite liste de questions spécifique à la localisation pour générer un premier sous-ensemble de réponses à un premier sous-ensemble de questions issues de ladite liste de questions spécifique à la localisation ;
- obtention (116 ; 216 ; 319 ; 416 ; 516 ; 619 ; 719 ; 816 ; 916) d'un deuxième sous-ensemble de réponses à un deuxième sous-ensemble de questions issues de ladite liste de questions spécifique à la localisation via une interface utilisateur (130 ; 230 ; 330 ; 430 ; 530 ; 630 ; 730 ; 830 ; 930), qui sont restées sans réponse après ledit mappage (115 ; 215 ; 318 ; 415 ; 515 ; 618 ; 718 ; 815 ; 915) desdites données de configuration matérielle sur ladite liste de questions spécifique à la localisation ;
- compilation (117 ; 217 ; 320 ; 417 ; 517 ; 620 ; 720 ; 817 ; 917) d'un ensemble de réglages de commande spécifique à la localisation comprenant des valeurs de paramètres pour configurer ledit système de ventilation (101 ; 201 ; 301 ; 401 ; 501 ; 601 ; 701 ; 801 ; 901) et lesdites données de localisation, sur la base dudit premier sous-ensemble de réponses et dudit deuxième sous-ensemble de réponses à ladite liste de questions spécifique à la localisation ; et
- configuration (118 ; 218 ; 321 ; 418 ; 518 ; 621 ; 721 ; 818 ; 918) dudit système de ventilation (101 ; 201 ; 301 ; 401 ; 501 ; 601 ; 701 ; 801 ; 901) en utilisant les valeurs de paramètres issues dudit ensemble de réglages de commande spécifique à la localisation.

2. Procédé de configuration d'un système de ventilation (101 ; 201 ; 301 ; 401 ; 501 ; 601 ; 701 ; 801 ; 901) selon la revendication 1, dans lequel lesdites données de localisation sont obtenues à partir d'une unité de positionnement (240) à l'intérieur dudit dispositif d'installateur (100 ; 200 ; 300 ; 400 ; 500 ; 600 ; 700 ; 800 ; 900).

3. Procédé de configuration d'un système de ventilation (101 ; 201 ; 301 ; 401 ; 501 ; 601 ; 701 ; 801 ; 901) selon la revendication 1, dans lequel lesdites données de localisation sont obtenues à partir d'une unité de positionnement qui se trouve à l'extérieur dudit dispositif d'installateur (100 ; 200 ; 300 ; 400 ; 500 ; 600 ; 700 ; 800 ; 900).

4. Procédé de configuration d'un système de ventilation (101 ; 201 ; 301 ; 401 ; 501 ; 601 ; 701 ; 801 ; 901) selon la revendication 1, dans lequel lesdites données de localisation sont obtenues via ladite interface utilisateur (130 ; 230 ; 330 ; 430 ; 530 ; 630 ; 730 ; 830 ; 930).

5. Procédé de configuration d'un système de ventilation (101 ; 201 ; 301 ; 401 ; 501 ; 601 ; 701 ; 801 ; 901) selon la revendication 1, dans lequel lesdites données de localisation sont obtenues à partir dudit système de ventilation (101 ; 201 ; 301 ; 401 ; 501 ; 601 ; 701 ; 801 ; 901) ou d'un équipement périphérique dudit système de ventilation (101 ; 201 ; 301 ; 401 ; 501 ; 601 ; 701 ; 801 ; 901).

6. Procédé de configuration d'un système de ventilation (101 ; 201 ; 301 ; 401 ; 501 ; 601 ; 701 ; 801 ; 901) selon l'une des revendications précédentes, comprenant en outre les étapes suivantes avant ladite obtention (113 ; 213 ; 316 ; 413 ; 513 ; 616 ; 716 ; 813 ; 913) d'une liste de questions spécifique à la localisation :
- obtention (313 ; 613 ; 713) d'une identification de version du logiciel installé sur ledit système de ventilation (101 ; 201 ; 301 ; 401 ; 501 ; 601 ; 701 ; 801 ; 901) ;
- vérification (314 ; 614 ; 714) de ladite identification de version par rapport à l'identification de version de la version la plus récente dudit logiciel ; et
- installation (315 ; 615 ; 715) de ladite version la plus récente dudit logiciel sur ledit système de ventilation (101 ; 201 ; 301 ; 401 ; 501 ; 601 ; 701 ; 801 ; 901) si ladite identification de version ne correspond pas à ladite identification de version de ladite version la plus récente.

7. Procédé de configuration d'un système de ventilation (101 ; 201 ; 301 ; 401 ; 501 ; 601 ; 701 ; 801 ; 901) selon l'une des revendications précédentes, comprenant en outre :
- stockage (419 ; 519 ; 622 ; 722) dudit ensemble de réglages de commande spécifique à la localisation en relation avec ledit système de ventilation (101 ; 201 ; 301 ; 401 ; 501 ; 601 ; 701 ; 801 ; 901) et lesdites données de localisation.

8. Procédé de configuration d'un système de ventilation (101 ; 201 ; 301 ; 401 ; 501 ; 601 ; 701 ; 801 ; 901) selon l'une des revendications précédentes, comprenant en outre :
- report (520 ; 623 ; 723) de ladite configuration (118 ; 218 ; 321 ; 418 ; 518 ; 621 ; 721 ; 818 ; 918) dudit système de ventilation (101 ; 201 ; 301 ; 401 ; 501 ; 601 ; 701 ; 801 ; 901) vers un dispositif utilisateur (503 ; 603 ; 703).

9. Procédé de configuration d'un système de ventilation (101 ; 201 ; 301 ; 401 ; 501 ; 601 ; 701 ; 801 ; 901) selon la revendication 5 et la revendication 7, dans lequel ladite configuration (118 ; 218 ; 321 ; 418 ; 518 ; 621 ; 721 ; 818 ; 918) dudit système de ventilation (101 ; 201 ; 301 ; 401 ; 501 ; 601 ; 701 ; 801 ; 901) en utilisant les valeurs de paramètre dudit ensemble de réglages de commande spécifique à la localisation est effectuée via ledit dispositif utilisateur (503 ; 603 ; 703).

10. Procédé de configuration d'un système de ventilation (101 ; 201 ; 301 ; 401 ; 501 ; 601 ; 701 ; 801 ; 901) selon la revendication 9, dans lequel la mise à jour des valeurs de paramètre dudit ensemble de réglages de commande spécifique à la localisation sur ledit système de ventilation (101 ; 201 ; 301 ; 401 ; 501 ; 601 ; 701 ; 801 ; 901) est effectué via ledit dispositif utilisateur (503 ; 603 ; 703) ou directement à partir d'un registre central (102 ; 202 ; 302 ; 402 ; 502 ; 602 ; 702 ; 802 ; 902).

11. Dispositif d'installateur (100 ; 200 ; 300 ; 400 ; 500 ; 600 ; 700 ; 800 ; 900) doté d'une connectivité de données à un système de ventilation (101 ; 201 ; 301 ; 401 ; 501 ; 601 ; 701 ; 801 ; 901), adapté pour configurer ledit système de ventilation (101 ; 201 ; 301 ; 401 ; 501 ; 601 ; 701 ; 801 ; 901), ledit dispositif d'installateur (100 ; 200 ; 300 ; 400 ; 500 ; 600 ; 700 ; 800 ; 900) comprenant une unité de traitement (110 ; 210 ; 310 ; 410 ; 510 ; 610 ; 710 ; 810 ; 910) et une mémoire dotée d'un programme informatique qui est adapté pour permettre au dispositif d'installateur (100 ; 200 ; 300 ; 400 ; 500 ; 600 ; 700 ; 800 ; 900) d'effectuer les étapes suivantes :
- obtention (112 ; 212 ; 312 ; 412 ; 512 ; 612 ; 712 ; 812 ; 912) de données de localisation indicatives de la localisation où ledit système de ventilation (101 ; 201 ; 301 ; 401 ; 501 ; 601 ; 701 ; 801 ; 901) est installé,
**CARACTERISE EN CE QUE** ledit dispositif d'installateur est en outre adapté pour effectuer les étapes suivantes :
- obtention (113 ; 213 ; 316 ; 413 ; 513 ; 616 ; 716 ; 813 ; 913) d'une liste de questions spécifique à la localisation pour ledit système de ventilation (101 ; 201 ; 301 ; 401 ; 501 ; 601 ; 701 ; 801 ; 901) en utilisant lesdites données de localisation ;
- obtention (114 ; 214 ; 317 ; 414 ; 514 ; 617 ; 717 ; 814 ; 914) de données de configuration matérielle pour ledit système de ventilation (101 ; 201 ; 301 ; 401 ; 501 ; 601 ; 701 ; 801 ; 901), dans lequel les données de configuration matérielle sont acquises automatiquement par demande audit système de ventilation via une connexion de données entre ledit dispositif d'installateur et ledit système de ventilation ;
- mappage (115 ; 215 ; 318 ; 415 ; 515 ; 618 ; 718 ; 815 ; 915) desdites données de configuration matérielle sur des questions issues de ladite liste de questions spécifique à la localisation pour générer un premier sous-ensemble de réponses à un premier sous-ensemble de questions issues de ladite liste de questions spécifique à la localisation ;
- obtention (116 ; 216 ; 319 ; 416 ; 516 ; 619 ; 719 ; 816 ; 916), via une interface utilisateur (130 ; 230 ; 330 ; 430 ; 530 ; 630 ; 730 ; 830 ; 930), d'un deuxième sous-ensemble de réponses à un deuxième sous-ensemble de questions issues de ladite liste de questions spécifique à la localisation qui sont restées sans réponse après ledit mappage (115 ; 215 ; 318 ; 415 ; 515 ; 618 ; 718 ; 815 ; 915) desdites données de configuration matérielle sur ladite liste de questions spécifique à la localisation ;
- compilation (117 ; 217 ; 320 ; 417 ; 517 ; 620 ; 720 ; 817 ; 917) d'un ensemble de réglages de commande spécifique à la localisation comprenant des valeurs de paramètres pour configurer ledit système de ventilation (101 ; 201 ; 301 ; 401 ; 501 ; 601 ; 701 ; 801 ; 901) et lesdites données de localisation, sur la base dudit premier sous-ensemble de réponses et dudit deuxième sous-ensemble de réponses à ladite liste de questions spécifique à la localisation ; et
- configuration (118 ; 218 ; 321 ; 418 ; 518 ; 621 ; 721 ; 818 ; 918) dudit système de ventilation (101 ; 201 ; 301 ; 401 ; 501 ; 601 ; 701 ; 801 ; 901) en utilisant les valeurs de paramètres issues dudit ensemble de réglages de commande spécifique à la localisation.

12. Produit de programme informatique comprenant des instructions pouvant être mises en œuvre par ordinateur pour effectuer les étapes suivantes lorsqu'elles sont exécutées sur un ordinateur :
- obtention (112 ; 212 ; 312 ; 412 ; 512 ; 612 ; 712 ; 812 ; 912) de données de localisation indicatives de la localisation où un système de ventilation (101 ; 201 ; 301 ; 401 ; 501 ; 601 ; 701 ; 801 ; 901) est installé,
**CARACTERISE EN CE QUE** ledit produit de programme informatique comprend en outre des instructions pouvant être mises en œuvre par ordinateur pour effectuer les étapes suivantes :
- obtention (113 ; 213 ; 316 ; 413 ; 513 ; 616 ; 716 ; 813 ; 913) d'une liste de questions spécifique à la localisation pour ledit système de ventilation (101 ; 201 ; 301 ; 401 ; 501 ; 601 ; 701 ; 801 ; 901) en utilisant lesdites données de localisation ;
- obtention (114 ; 214 ; 317 ; 414 ; 514 ; 617 ; 717 ; 814 ; 914) de données de configuration matérielle pour ledit système de ventilation (101 ; 201 ; 301 ; 401 ; 501 ; 601 ; 701 ; 801 ; 901), dans lequel les données de configuration matérielle sont acquises automatiquement par demande audit système de ventilation via une connexion de données entre un dispositif d'installateur et ledit système de ventilation ;
- mappage (115 ; 215 ; 318 ; 415 ; 515 ; 618 ; 718 ; 815 ; 915) desdites données de configuration matérielle sur des questions issues de ladite liste de questions spécifique à la localisation pour générer un premier sous-ensemble de réponses à un premier sous-ensemble de questions issues de ladite liste de questions spécifique à la localisation ;
- obtention (116 ; 216 ; 319 ; 416 ; 516 ; 619 ; 719 ; 816 ; 916), via une interface utilisateur (130 ; 230 ; 330 ; 430 ; 530 ; 630 ; 730 ; 830 ; 930), d'un deuxième sous-ensemble de réponses à un deuxième sous-ensemble de questions issues de ladite liste de questions spécifique à la localisation qui sont restées sans réponse après ledit mappage (115 ; 215 ; 318 ; 415 ; 515 ; 618 ; 718 ; 815 ; 915) desdites données de configuration matérielle sur ladite liste de questions spécifique à la localisation ;
- compilation (117 ; 217 ; 320 ; 417 ; 517 ; 620 ; 720 ; 817 ; 917) d'un ensemble de réglages de commande spécifique à la localisation comprenant des valeurs de paramètres pour configurer ledit système de ventilation (101 ; 201 ; 301 ; 401 ; 501 ; 601 ; 701 ; 801 ; 901) et lesdites données de localisation, sur la base dudit premier sous-ensemble de réponses et dudit deuxième sous-ensemble de réponses à ladite liste de questions spécifique à la localisation ; et
- configuration (118 ; 218 ; 321 ; 418 ; 518 ; 621 ; 721 ; 818 ; 918) dudit système de ventilation (101 ; 201 ; 301 ; 401 ; 501 ; 601 ; 701 ; 801 ; 901) en utilisant les valeurs de paramètres issues dudit ensemble de réglages de commande spécifique à la localisation.

13. Support de stockage lisible par ordinateur comprenant le produit de programme informatique selon la revendication 12.
